# EUROPÄISCHE PATENTSCHRIFT

(11) **EP 0 642 066 B1**
(45) Veröffentlichungstag und Bekanntmachung des Hinweises auf die Patenterteilung: **02.04.1997**
(21) Anmeldenummer: 94114039.4
(22) Anmeldetag: 07.09.1994
(51) Int. Cl.: G05B 19/4093

(54) **Dialogorientiertes Programmiersystem für eine CNC-Werkzeugmaschine**
Dialog orientated programming system for a CNC machine tool
Système de programmation conversationelle pour une machine-outil de CNC

(30) Priorität: 07.09.1993 DE 4330220; 07.09.1993 DE 4330221
(43) Veröffentlichungstag der Anmeldung: 08.03.1995
(60) Teilanmeldung: 96104343.7
(73) Patentinhaber: Traub AG, 73258 Reichenbach (DE)
(72) Erfinder: Waldenmaier, Peter, D-73054 Eislingen (DE); Monz, Joachim, D-73061 Ebersbach (DE); Wirth, Helmut, D-73734 Esslingen (DE)
(74) Vertreter: Schmidt, Steffen J., Dipl.-Ing.

(56) Entgegenhaltungen:
- EP-A- 0 404 950
- EP-A- 0 524 344
- EP-A- 0 553 621
- EP-A- 0 557 681
- WO-A-93/01703
- DE-A- 3 545 957
- DE-A- 4 014 595
- DE-C- 3 240 974
- US-A- 4 204 253

## Beschreibung

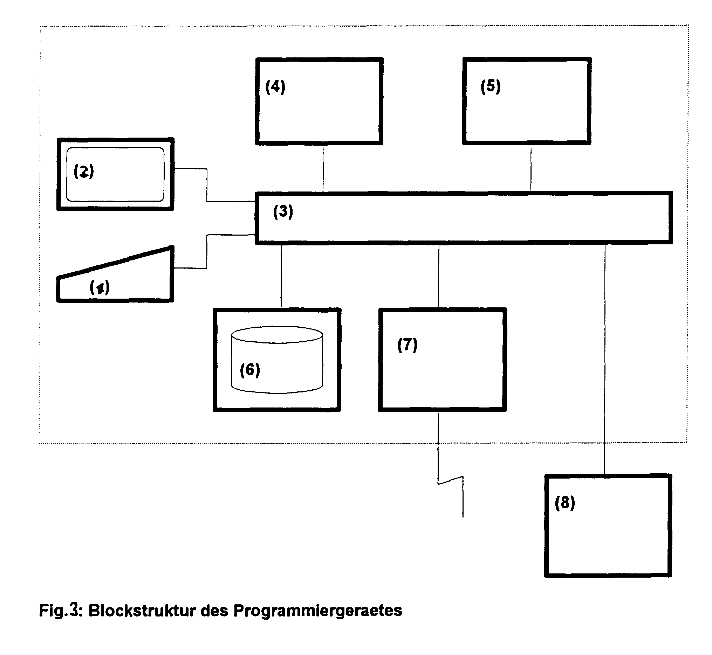

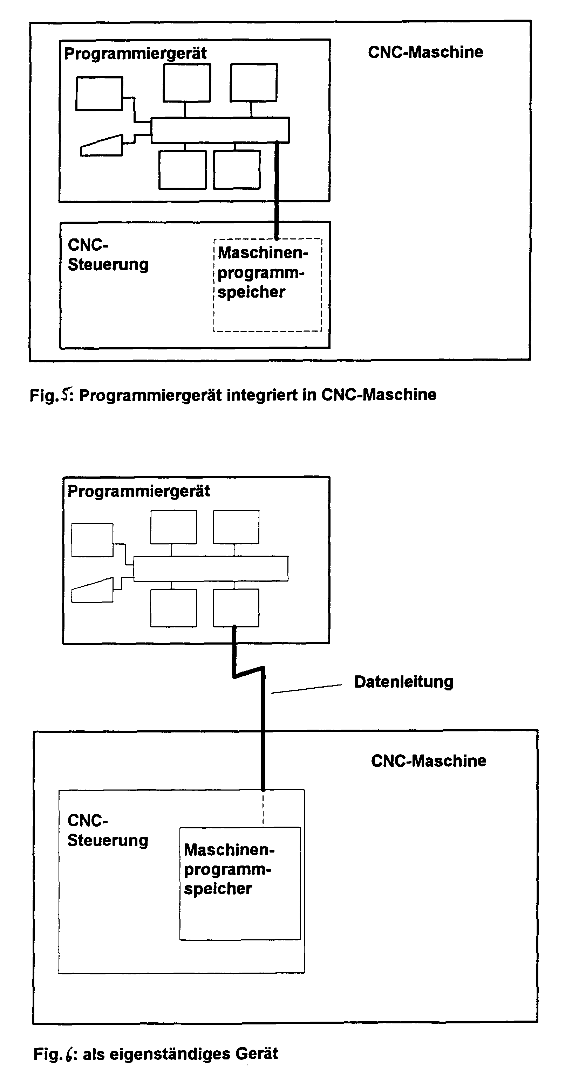

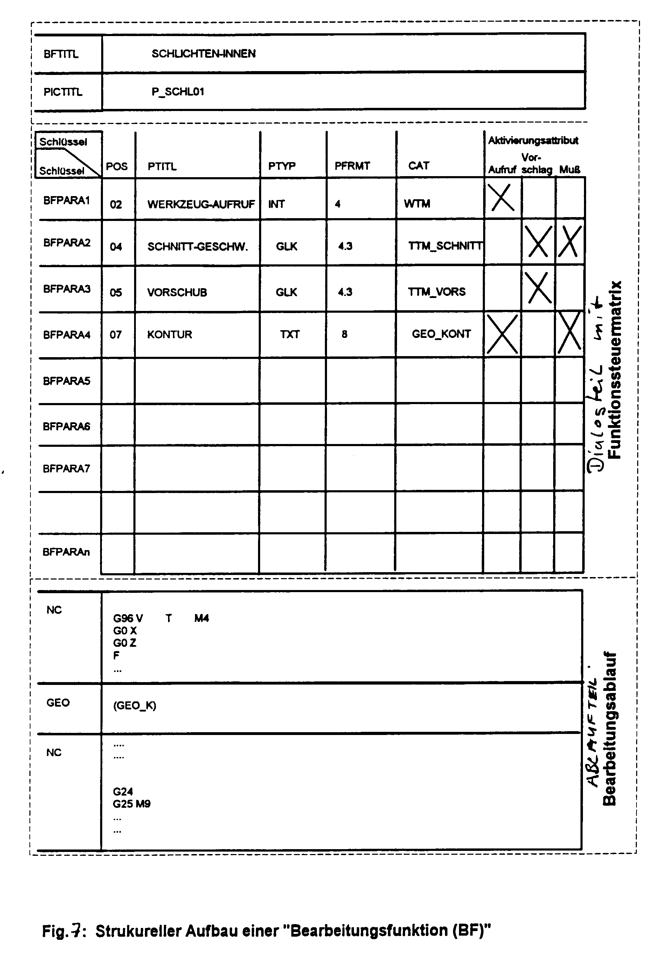

Die Erfindung betrifft ein graphisch interaktives, dialogorientiertes Programmiersystem zur Erzeugung von Programmen zur Steuerung des Bearbeitungsprozesses für die Fertigung eines Werkstückes auf einer numerisch gesteuerten Werkzeugmaschine (CNC-Werkzeugmaschine) sowie ein Verfahren zur Erstellung eines NC-Programmes für eine derartige Maschine. Ein derartiges Programmiersystem ist ausgestattet mit einer Tastatur zur Eingabe von Informationen, einem grafikfähigen CRT-Bildschirm zur Anzeige von graphischen und numerischen Informationen, einer Zentralprozessoreinheit zur Verarbeitung der Eingabeinformationen, einer Systemspeichereinheit, einem Arbeitsspeicher, einem nicht flüchtigen Hintergrundspeicher und einer Schnittstelleneinheit zum Austausch von Informationen mit anderen Geräten (Fig.3) angeordnet, integriert in der CNC-Steuerung der Werkzeugmaschine mit direktem Zugriff auf den Steuerdatenspeicher der CNC-Steuerung, oder als eigenständiges externes Gerät, unabhängig von der Maschine. Die Verbindung zum Austausch von Informationen mit der CNC-Steuerung der Maschine erfolgt hier über die oben angesprochene Schnittstelleneinheit (Fig.5 und Fig.6)

Solche Programmiersysteme sind nach dem Stand der Technik als sogenannte Auto-Programmiersysteme ( Auto-Programming-Systems oder auch als WOP-Systeme vorbekannt und in Technische Rundschau, 16. September 1988, Erweiterter Sonderdruck 08.90 "Vorteile durch werkstattorientierte Programmierung (WOP)", sowie in den DE-3240000C2, DE-3308765C2, sowie der DE-3240974C2 angegeben und dort näher beschrieben. Diese Geräte funktionieren prinzipiell so, daß dem Anwender durch fest in dem Programmiersystem vorgegebene Dialoge Eingaben abverlangt werden, um Programme zur Steuerung des Bearbeitungsprozesses für die Fertigung eines Werkstückes auf einer numerisch gesteuerten Werkzeugmaschine zu erzeugen. Die Ergebnisse dieser Eingaben werden graphisch am Bildschirm zur Kontrolle angezeigt.

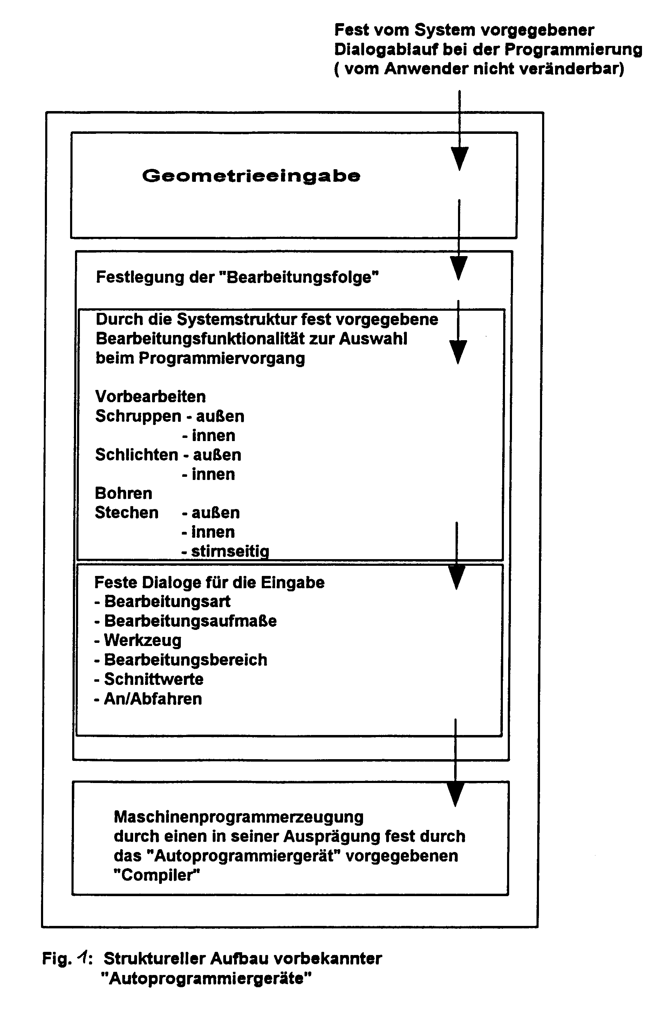

Der zeitliche Ablauf und die Form der Dialoge sind dabei durch die funktionelle Ausprägung dieser Programmiersysteme festgelegt und können durch den Anwender nicht mehr verändert werden. Aus diesen unveränderbaren, von diesen Programmiersystemen dem Benutzer angebotenen Dialogen und den durch diese Dialoge angeforderten Eingaben wird von den Programmiersystemen das Programm zur Steuerung des Bearbeitungsprozesses der CNC-Werkzeugmaschine in einem Übersetzungslauf erzeugt. Die Form des erzeugten Programmes zur Steuerung der CNC-Werkzeugmaschine wird dabei ebenfalls durch die funktionelle Ausprägung dieser Programmiersysteme festgelegt und kann deshalb vom Anwender nicht beeinflußt werden. Die Freiheitsgrade für den Anwender bei der Programmerstellung sind also auf die Auswahl der im Dialog angebotenen Funktionen, die Festlegung der Reihenfolge dieser Funktionen, sowie auf die vom Dialog des Programmiersystemes fest vorgegebenen Eingabemöglichkeiten für diese Funktionen beschränkt, wie dies in Fig. 1 schematisch veranschaulicht ist. Der Anwender kann also den im Programmiersystem verfügbaren Funktionsumfang weder bezüglich der Dialogführung noch im Hinblick auf den vom System erzeugten Programmaufbau für die Steuerung der CNC-Werkzeugmaschine beeinflussen. Der Funktionsumfang des Programmiersystemes kann ebenfalls nicht vom Anwender um eigene speziell von Ihm benötigte Funktionen erweitert werden.

Die Ausprägung dieser sogenannten Auto-Programmiersysteme hat zur Folge, daß die Erstellung eines Programmes zur Steuerung der Werkzeugmaschine mit diesen Geräten nur in einem vom Gerät selbst vorgegebenen Rahmen möglich ist. Dieser Rahmen muß vom Hersteller des Programmiersystems möglichst allgemeingültig festgelegt werden, damit möglichst viele Anwenderanforderungen abgedeckt werden. Diese Verallgemeinerung hat jedoch zwangsläufig zur Folge, daß die Funktionen nicht optimal auf speziell beim einzelnen Anwender auftretende Anforderungen angepaßt sein können. Der Anwender kann die Ausprägung der Programmiersysteme also auch nicht im Hinblick auf sein spezielles Zerspanungs-Know-How verändern. Dies bedeutet fehlende Adaptionsmöglichkeiten und fehlende Flexibilität.

Eine Möglichkeit zur Veränderung und Erstellung von Dialogfolgen und Darstellungen zur Bedienung von Fertigungseinrichtungen ist in DE 42 39 446 A1 dargestellt. Hier wird die Beeinflussung für den Dialog zur Steuerung von den im Fertigungssystem fest vorgegebenen Funktionsabläufen (Prozessen) beschrieben. Der Funktionsumfang kann jedoch auch hier nicht ohne konstruktiven Eingriff in die Struktur und das Funktionsmodell der Bedienungseinrichtung erfolgen.

Eine Optimierung des, von diesen vorbekannten Programmiersystemen erzeugten Programmes zur Steuerung der Werkzeugmaschine, kann vom Anwender im "Detail" nur in dem durch einen Übersetzungslauf des Programmiersystemes erzeugten Maschinenprogramm ausgeführt werden. Hierbei zeigt sich jedoch sofort zwangsläufig ein weiterer Nachteil dieser Autoprogrammiergeräte.

Die zu dem im Autoprogrammiergerät erstellten Programm gehörenden Daten müssen zwangsläufig auch die Dialoginformationen enthalten, die zu diesem Programm geführt haben, damit eine später ggf. notwendige Änderung des Programmes ebenfalls dialoggeführt im Programmiersystem durchgeführt werden kann. Das so erstellte Programm wird allgemein als Quellprogramm bezeichnet.

Die Steuerung der Werkzeugmaschine kann dieses so erstellte Quellprogramm und die darin noch enthaltenen Dialoginformationen nicht verarbeiten. Aus dem sogenannten Quellprogramm muß also durch das Programmiersystem in einem Übersetzungslauf ein an der Steuerung der Werkzeugmaschine ablauffähiges Programm ohne Dialoginformationen erzeugt werden. Dieses so erzeugte Programm wird allgemein als Maschinenprogramm bezeichnet.

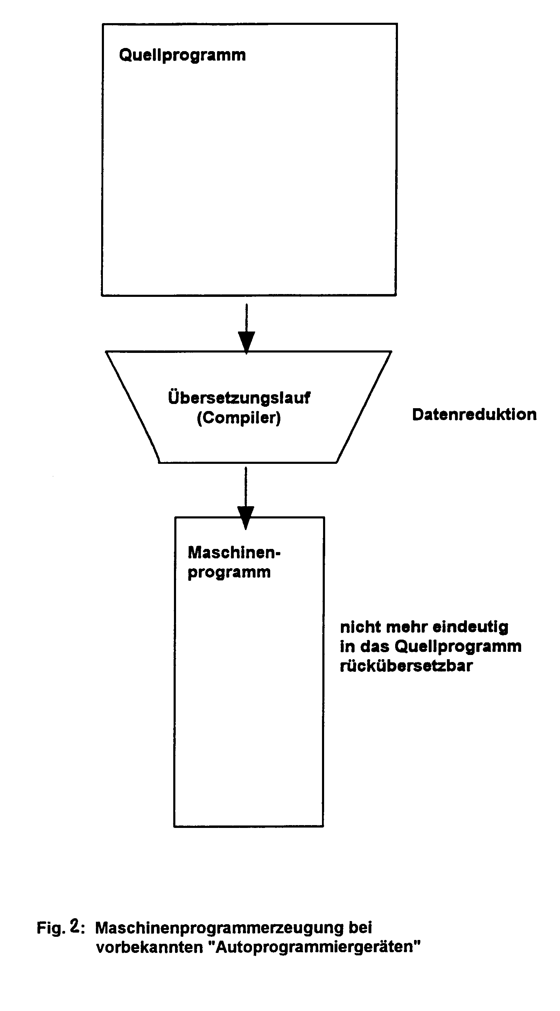

Bei dem beschriebenen Übersetzungslauf findet also eine Datenreduktion statt, die dazu führt, daß dieses Maschinenprogramm nicht mehr in den ursprünglichen, vom Programmiersystem verarbeitbaren Zustand zurückübersetzt werden kann. Dieses Problem der Datenreduktion ist auch aus der Funktionsweise von sogenannten Hochsprachen-Compilern bekannt. Ein durch einen Compiler aus einem Quellprogramm erzeugtes Maschinenprogramm ist ebenfalls nicht eindeutig und kann nicht in das ursprüngliche Quellprogramm zurückübersetzt werden, wie dies in Fig.2 veranschlauicht ist.

Durch die obigen Ausführungen wird deutlich, daß durch den Anwender im Maschinenprogramm durchgeführte Änderungen in den beschrieben Autoprogrammierystemen nicht in das Quellprogramm, das mit dem Programmiersystem im Dialog bearbeitbar ist zurückgeführt werden können. Der Anwender hat also nach Änderungen im CNC-Werkzeugmaschinenprogramm zwei grundsätzlich unterschiedliche Programme. Daraus ergibt sich zwangsläufig das Problem der Rückdokumentation von Programmänderungen, das z.B. in Thomas Schulz et al. "Defizite der heutigen Werkstückprogrammierung", Werkstatt und Betrieb 127 (1994) 1-2, (Carl Hauser Verlag München 1994) in Verbindung mit Autoprogrammiersystemen und WOP-Systemen beschrieben ist. Als weiterer Nachteil dieser bekannten Programmiersysteme ist zu sehen, daß Eingaben und Änderungen bei der Programmerstellung nicht zu jedem Zeitpunkt beliebig frei wählbar dialoggeführt und graphisch interaktiv, oder im NC-Satzformat des Maschinenprogramms durchgeführt werden können, da das Maschinensteuerprogramm ( im NC-Satzformat ) bei der dialoggeführten Eingabe noch nicht zur Verfügung steht und erst später durch den Übersetzungslauf erzeugt wird.

Die DE-A-40 14 595 beschreibt eine CAD/CAM-Einrichtung, die Bearbeitungsattribute sowie die relative Bearbeitungsbahn und die Bearbeitungsreihenfolge beinhaltende Bearbeitungsablauf-Informationen, die in einem Speicherteil gespeichert sind, der jedem einzelnen geometrischen Element jeder Form eines Objektes zugeordnet ist. Die Bearbeitungsablauf-Information kann je nach Bedarf modifiziert und wieder gespeichert werden, so daß es möglich ist, Informationen betreffend Spezifikationen von Bearbeitungsmethoden interaktiv einzugeben. NC-Daten werden zur Bearbeitung einer geometrischen Form auf der Basis von in ihrem Speicherteil gespeicherten Informationen erzeugt. Damit ist es gemäß diesem Stand der Technik möglich, die NC-Daten für alle geometrischen Formen auch dann insgesamt auszugeben, wenn für einzelne Teile einer geometrischen Form des Objekts gemischte bestimmte Spezifikationen von Bearbeitungsbedingungen und eine gemeinsame Spezifikation von Bearbeitungsbedingungen für eine Einheit der geometrischen Form des Objekts vorliegen.

Aus der EP-A-0 404 950 ist eine interaktive graphische Steuerung für eine NC-Maschine bekannt, bei der ein NC-Programm verändert werden kann und die Veränderung im Rahmen einer Bearbeitungssimulation auf einem Bildschirm dargestellt wird, um das NC-Programm überprüfen zu können. Bei diesem Stand der Technik wird die Bearbeitungssimulation unterbrochen, wenn ein Programmeditierbefehl eingegeben wird und die Bearbeitungssimulation wird durch die automatische Programmiereinrichtung gemäß dem NC-Programm ausgeführt, das von der NC-Steuerung bereitgestellt wird. Wenn ein neuer NC-Satz eingegeben wird, wird das NC-Programm unter Verwendung des NC-Satzes mit Hilfe der numerischen Steuerung editiert. Die Bearbeitungssimulation und die Editierung des NC-Programms kann bewirkt werden, ohne daß die Betriebsart der NC-Steuerung gewechselt wird.

Die WO 93/01703 offenbart einen konfigurierbaren Mensch-Maschine-Kommunikationsbereich für Werkzeugmaschinen- oder Robotersteuerungen, der zunächst eine universelle Ausprägung aufweist, die auf beliebige Anwendungsfälle zugeschnitten werden kann. Eine Informationsaufbereitung führt zu Steuerdaten, die von einem integrierten Steuerungskern universell verarbeitet werden können, so daß die Ansteuerung der Maschinen- und Roboterantriebe sowie der Peripherie gewährleistet ist.

Die EP-A-0 524 344 offenbart eine konfigurierbare Werkzeugmaschinensteuerung mit einer Vielzahl von Funktionsobjekten. Jedes Funktionsobjekt weist neben einem fakultativen Bedienteil einen Prozedurteil sowie einen Kommunikationsteil auf. Eine Konfiguration der Werkzeugmaschinensteuerung ist als konkrete Ausprägungsvariante von Funktionsobjekten durch die Kombination dieser Objekte zu einem oder mehreren Prozessen realisierbar.

Aus der EP-A-0 553 621 ist eine programmierbare Computersteuerung für eine Werkzeugmaschine bekannt, die ein zwischen den CNC-Teil und die Maschine geschaltetes Anpaßsteuermodul zur Steuerung der Maschinenfunktionen aufweist. Zur einfachen Erweiterbarkeit der Werkzeugmaschine um weitere Maschinenhilfsfunktionen ist ein weiteres Anpaßsteuermodul vorgesehen, welches über eine weitere Schnittstelle mit dem CNC-Teil verbunden ist und in dem ein weiteres Systemprogrammteil abspeicherbar ist, mit dem weitere vom CNC-Teil empfangene Steuerbefehle in erweiterte Maschinenbewegungen umsetzbar sind.

Die US-A-4,204,253 offenbart eine Programmierkonsole zum Erzeugen und Korrigieren eines Anwenderprogramms, das aus einer Reihe von Programmschritten besteht, die jeweils einen Funktionscode und mindestens einen Parameterwert aufweisen. Der Funktionscode und der mindestens eine Parameterwert werden von Anzeigeeinrichtungen der Programmierkonsole angezeigt, und Eingabeeinrichtungen sind vorgesehen, um eine Funktion auszuwählen und geeignete Parameterwerte einzugeben.

Die DE-A-35 45 957 offenbart ein Verfahren und eine Schaltungsanordnung zur automatischen Abarbeitung von Einrichtefunktionen in numerischen Steuerungen, wobei Bearbeitungsprogramme, Bearbeitungsparameter und maschinenspezifische Daten in dafür vorgesehene Speicher eingegeben und zur Abarbeitung durch eine Bearbeitungseinheit aus diesen Speichern entnommen werden. Um den Bedienungsaufwand im Einrichtebetrieb zu verringern, werden die Einrichtefunktionen als parametrisierte Programme durch die Bearbeitungseinheit aufbereitet und die in der Programmfolge benötigten Einrichteparameter nach Auslösung durch Bediensignale definiert und bearbeitet.

Die EP-A-0 557 681 zeigt ein Verfahren und eine Anordnung zum Auswählen von Parametern in einer programmgesteuerten Steuereinheit, wobei durch Schalter Einträge anwählbar sind, die den gewünschten Parametern entsprechen und den Adressen der Parameter in einer Systemdatenbasis zugeordnet sind. Die Parameter sind vorzugsweise länder- oder sprachspezifische Daten, so daß beispielsweise eine Kommunikationsanlage auf einfache Weise auf die Erfordernisse verschiedener Länder und/oder Sprachen eingestellt werden kann.

Ausgehend von diesem Stand der Technik liegen der Erfindung folgende Aufgaben zugrunde:

Das erfindungsgemäße Programmiersystem soll so gesteuert sein, daß der funktionale Umfang des Gerätes bezüglich der allgemeinen Dialogführung den bei der Programmerstellung mit diesem System zur Auswahl angebotenen Funktionen mit zugehörigem Dialog und der zu diesen Funktionen gehörenden Ablaufsequenz, die die Steuerung der CNC-Werkzeugmaschine bewirkt, wahlfrei vom Anwender entsprechend seiner Anforderungen geändert, ergänzt oder neu erstellt werden kann, ohne daß Änderungen in der Grundstruktur des Programmiersystems durchgeführt werden müssen, wobei die Änderungen, die vom Anwender zur Optimierung im Maschinenprogramm CNC-Satz-Ebene im G-Code durchgeführt werden, sofort im Dialogprogramm (Quellprogramm) zur Verfügung stehen.

Außerdem sollen Änderungen wahlweise dialoggeführt, graphisch interaktiv, oder direkt auf NC-Satz-Ebene im G-Code durchgeführt werden können. Eingriffe zur Programmerstellung und -änderung sollen zu jedem Zeitpunkt beliebig frei auf allen Eingabeebenen durchgeführt werden können.

Das Programmiersystem ist zu diesem Zweck durch die Merkmale des Anspruchs 1 gekennzeichnet, wie sie in Fig. 3 auch veranschaulicht sind. Das erfindungsgemäße Verfahren weist die Merkmale des Anspruchs 23 auf.

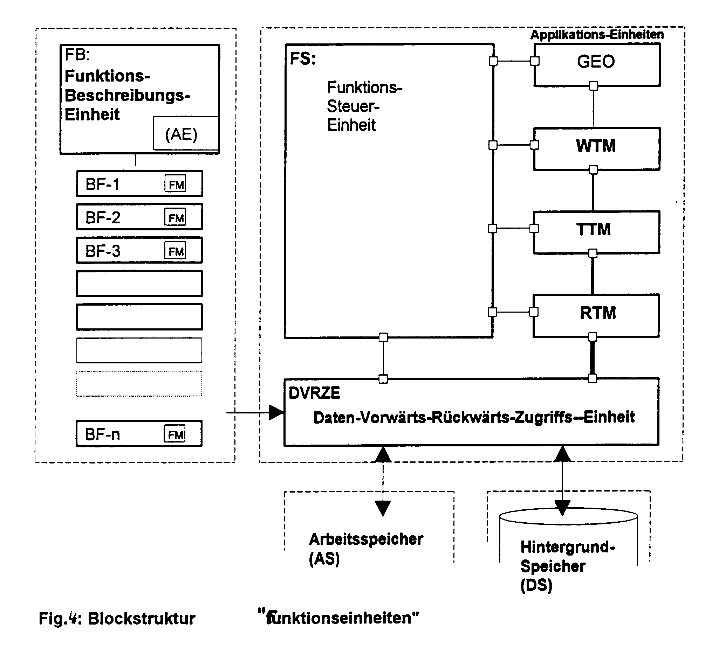

In der zentralen Systemspeichereinheit ist vorzugsweise eine Vorrichtung angeordnet , welche aus folgenden Funktionseinheiten gebildet ist:
- Eine Funktionsbeschreibungseinheit, mit der sogenannte Bearbeitungsfunktionen (BF) erstellt werden, welche bei der späteren Programmerstellung für die Steuerung des Bearbeitungsprozesses zur Auswahl und Parametrisierung im Dialog vorgelegt werden,
- Eine Funktionssteuereinheit, welche den Dialogablauf am CRT-Bildschirm entsprechend dem Dialogbeschreibungsteil der jeweils ausgewählten Bearbeitungsfunktion (BF) steuert, und dabei ggf. sogenannte Applikationseinheiten startet, welche in einer Funktionssteuermatrix aktiviert sind,
- Applikationseinheiten, welche im Programmiersystem standardmäßig vorhanden sind und entweder von der Funktionssteuereinheit selbständig aufgerufen werden, oder vom Anwender wahlfrei aufgerufen werden können,
- Eine Daten-Vorwärts-Rückwärts-Zugriffs-Einheit(DVRZE) welche sämtliche Datenzugriffe im Programmiersystem über ein Datenstellwerk steuert, wobei die Datenzugriffspfade entsprechend der von der Funktionssteuereinheit angelegten Zugriffsschlüssel hergestellt werden, besteht, und von der Zentralprozessoreinheit zur Verarbeitung der Eingabeinformationen verwendet wird. Dies ist in Fig. 4 veranschaulicht.

Das Programmiersystem ist zweckmäßig integriert in der CNC-Steuerung der Werkzeugmaschine mit direktem Zugriff auf den Steuerdatenspeicher der CNC-Steuerung, oder als eigenständiges externes Gerät, unabhängig von der Maschine. Die Verbindung zum Austausch von Informationen mit der CNC-Steuerung der Maschine erfolgt hier über die oben angesprochene Schnittstelleneinheit angeordnet (siehe Fig.5 und Fig.6).

Der strukturelle Aufbau des Programmiersystemes ist in den Fig.3 und Fig.4 gezeigt.

Mit der Funktionsbeschreibungseinheit (FB) werden sogenannte Bearbeitungsfunktionen (BF) erstellt. Eine Bearbeitungsfunktionen (BF) besteht immer aus dem Dialogteil (DIA), welcher die zu dieser Bearbeitungsfunktionen (BF) gehörende Dialogführung beschreibt und dem Bearbeitungsablaufteil (ABLAUF) welcher die zu der Bearbeitungsfunktionen (BF) gehörenden Steuersequenz zur Steuerung der Werkzeugmaschine enthält.

Mit der Funktionsbeschreibungseinheit (FB) werden also die Bearbeitungsfunktionen (BF) erstellt, welche bei der späteren Programmerstellung für die Steuerung eines Bearbeitungsprozesses an der Werkzeugmaschine, durch das Programmiersystem im Dialog zur Auswahl angeboten werden.

Der Funktionsumfang des Programmiersystemes wird also durch die Funktionsbeschreibungseinheit (FB) geändert oder ggf. vollständig neu erstellt. Die im Programmiersystem wahlfrei verfügbaren Applikationseinheiten (APPL) werden durch die in der Funktionsbeschreibungseinheit (FB) enthaltenen Aktivierungseinheit (Ä) einem Eingabeparameter zugeordnet und der Zugang durch das Setzen des entsprechenden Kategorie Schlüssels (CAT) aktiviert.

Auf diese Weise wird die Funktionssteuermatrix (FM) erzeugt. (Fig.7)

Die Funktionssteuereinheit (FS) wird bei der Programmerstellung für einen gewünschten Bearbeitungsprozeß der Maschine gestartet. Sie steuert den Dialogablauf am CRT-Bildschirm entsprechend dem Dialogteil der ausgewählten beitungsfunktion (BF).

Sie startet dabei ggf. die Applikationseinheiten (APPL) welche in der Bearbeitungsfunktion (BF) aktiviert sind.

Die Funktionssteuereinheit überwacht Eingaben vom Anwender und führt die Eingaben der ausgewählten Bearbeitungsfunktionen (BF) zu, wodurch aus dieser in der Funktionsbeschreibungseinheit (FB) wertfrei erstellten Bearbeitungsfunktionen (BF) ein mit aktuellen Werten versehener Programmabschnitt wird.

Applikationseinheiten (APPL) sind Hilfsfunktionen, welche im Programmiersystem zur Verfügung stehen und vom Anwender wahlfrei aufgerufen werden können. Der Funktionsaufruf kann entweder manuell durch Drücken der entsprechenden Funktionstaste erfolgen, oder wird von der Funktionssteuereinheit selbständig durchgeführt, wenn eine Applikationseinheit (APPL) in der verwendeten Bearbeitungsfunktionen (BF) aktiviert ist.

Solche Applikationseinheiten sind zum Beispiel:

Geometrieeditor und -Prozessor (GEO) zur graphisch interaktiven Eingabe von Bearbeitungskonturen.

Technologie-Tabellen-Modul (TTM) zum Vorschlag von Schnittwerten z.B. Vorschübe und Schnittgeschwindigkeit für die Werkzeugbewegung an der Maschine.

Werkzeugverwaltungs-Modul (WTM).

Werkzeugmagazinverwaltung (RTM).

Das Programmiersystem ist jederzeit durch weitere solche Applikationseinheiten (APPL) erweiterbar.

Die Daten-Vorwärts-Rückwärts-Zugriffs-Einheit(DVRZE) steuert sämtliche Datenwege im Programmiersystem. Das heißt den einzelnen Funktionseinheiten ist selbst nicht bekannt, an welcher Position im Speicher die zum jeweiligen Zeitpunkt benötigten Daten liegen. Dies bedeutet weiter, daß die einzelnen Funktionseinheiten keine Kenntnis über den genauen Aufbau(Reihenfolge, Format) z.B. der Bearbeitungsfunktionen (BF) oder des beim Programmiervorgang erstellten Programms haben müssen.

Der Zugang auf benötigte Datensätze wird von der Daten-Vorwärts-Rückwärts-Zugriffs-Einheit(DVRZE) grundsätzlich über sogenannte Schlüssel hergestellt.

Die Daten-Vorwärts-Rückwärts-Zugriffs-Einheit(DVRZE) ist zur Herstellung des Datenzugangs mit einer hier als Datenstellwerk (DSW) bezeichneten Funktionseinheit ausgestattet.

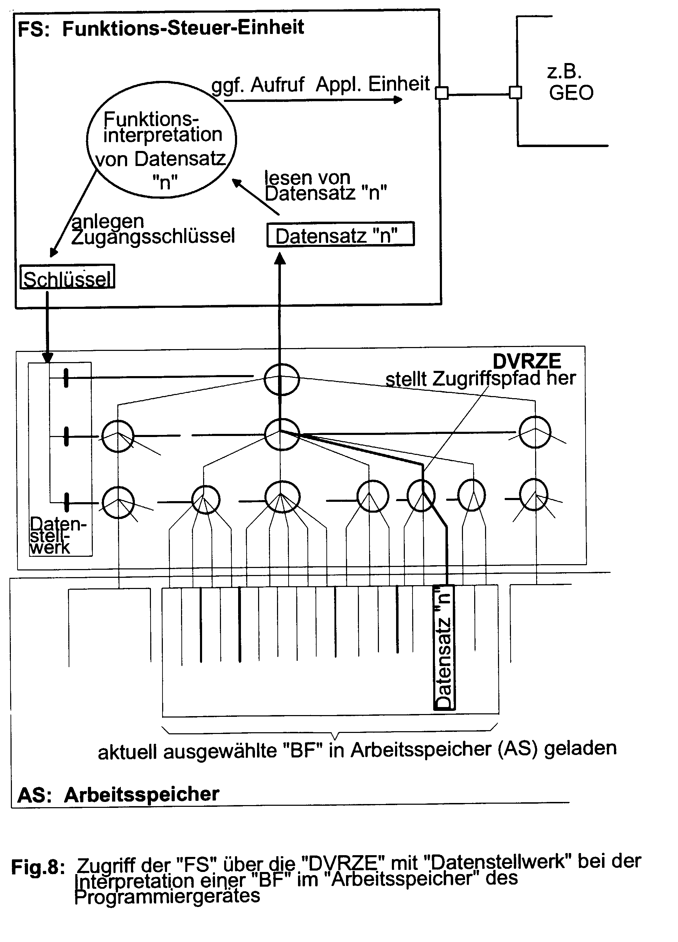

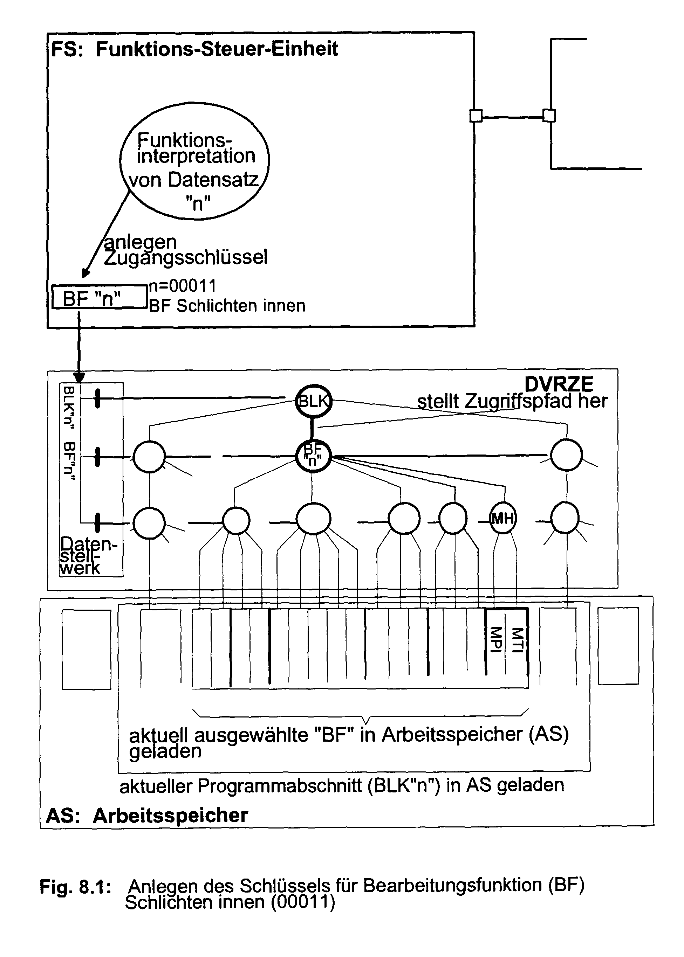

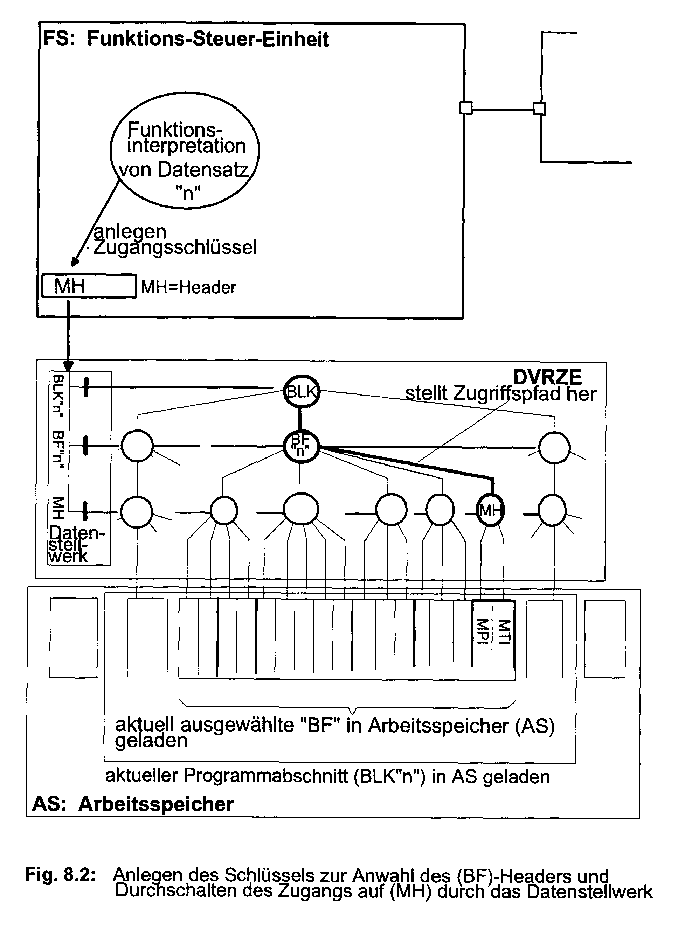

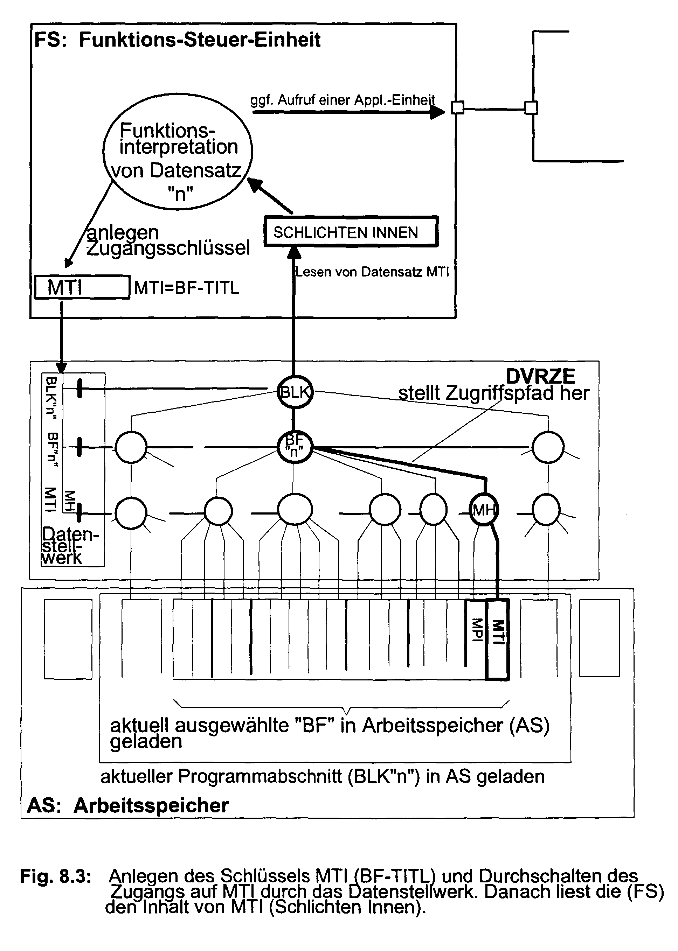

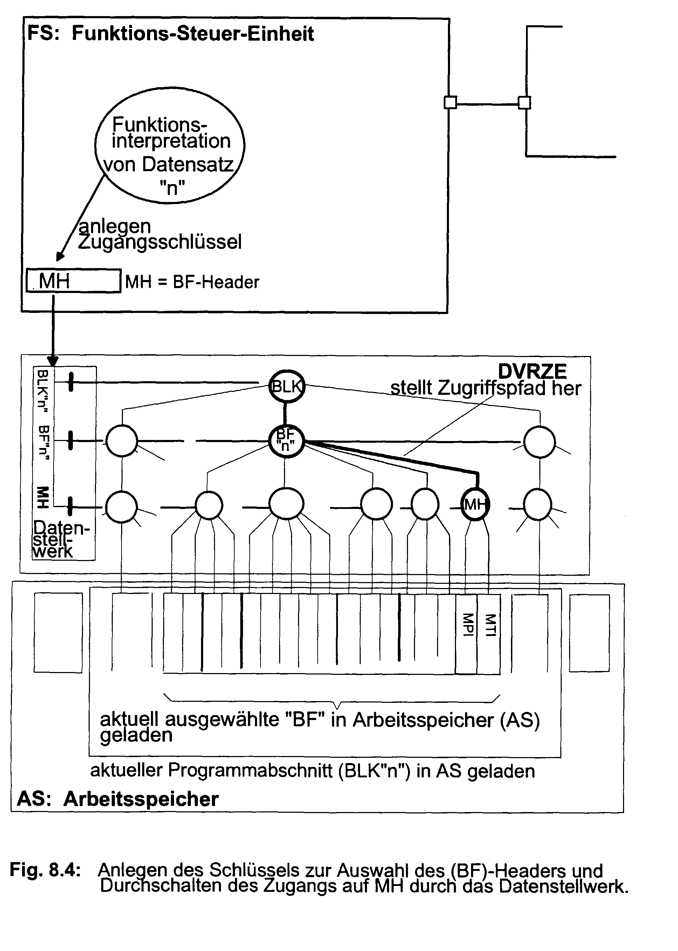

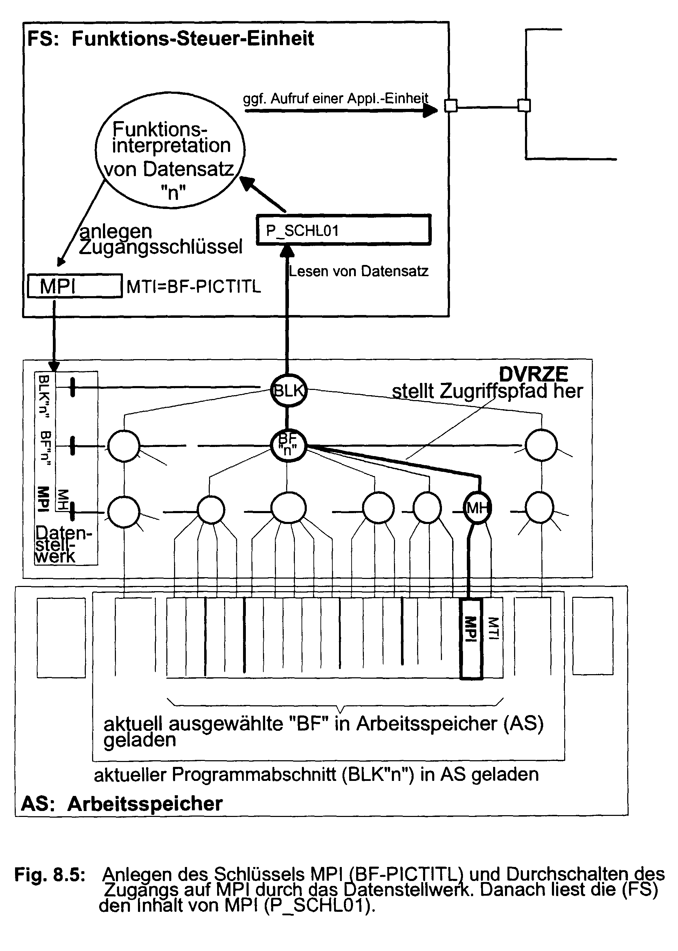

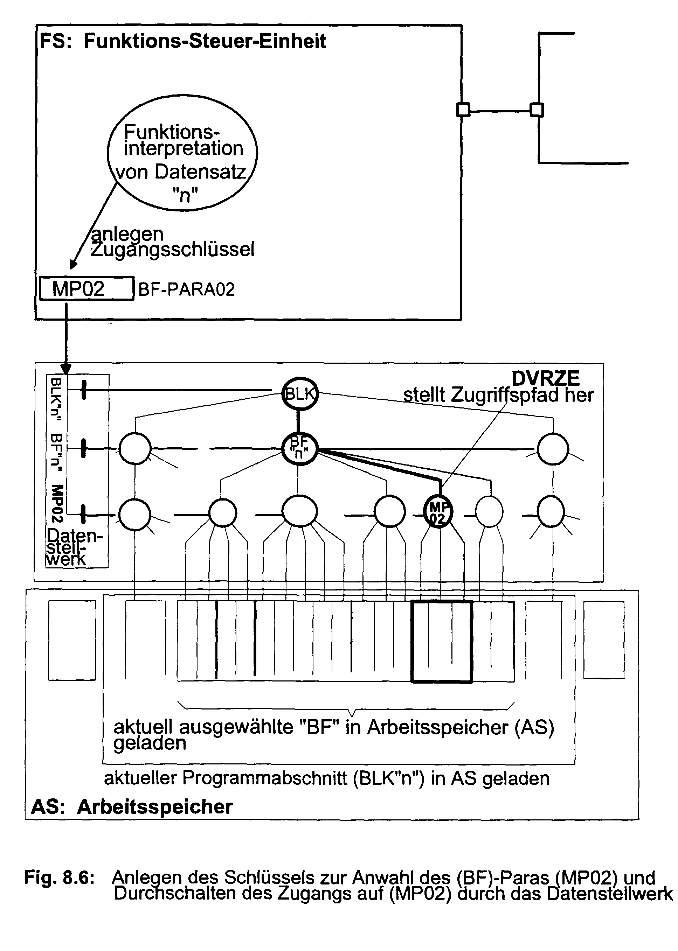

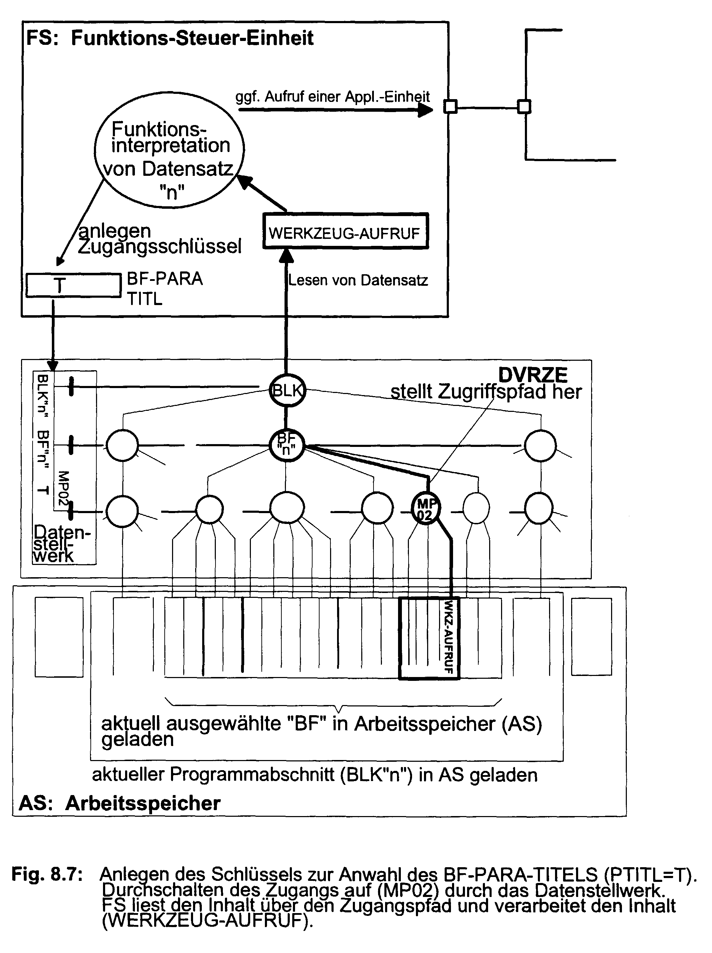

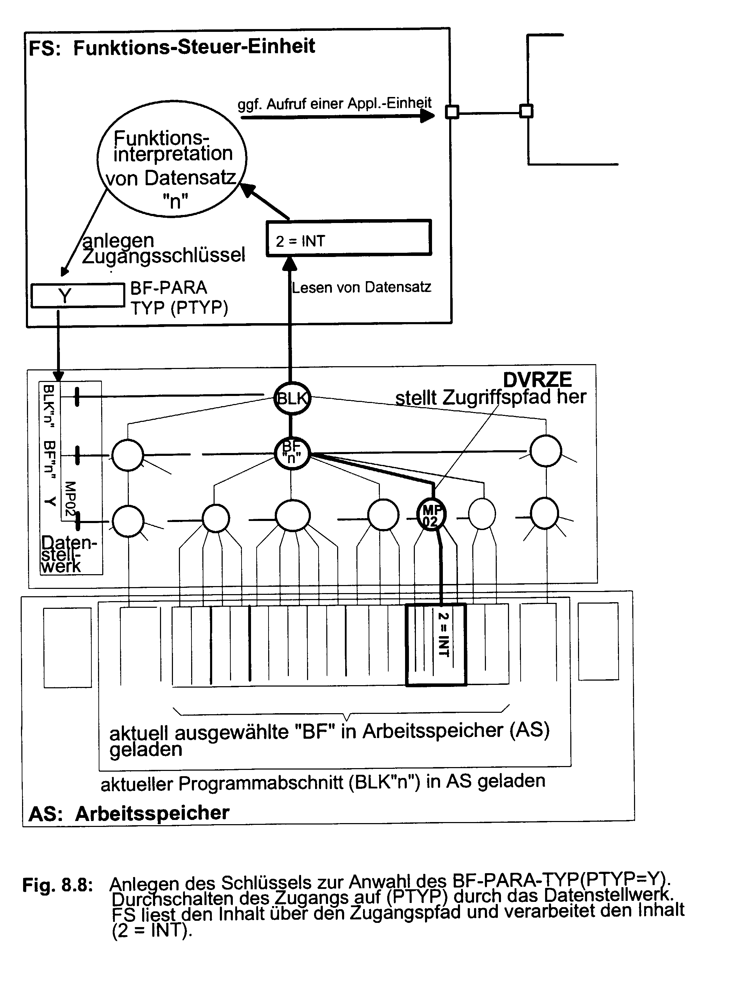

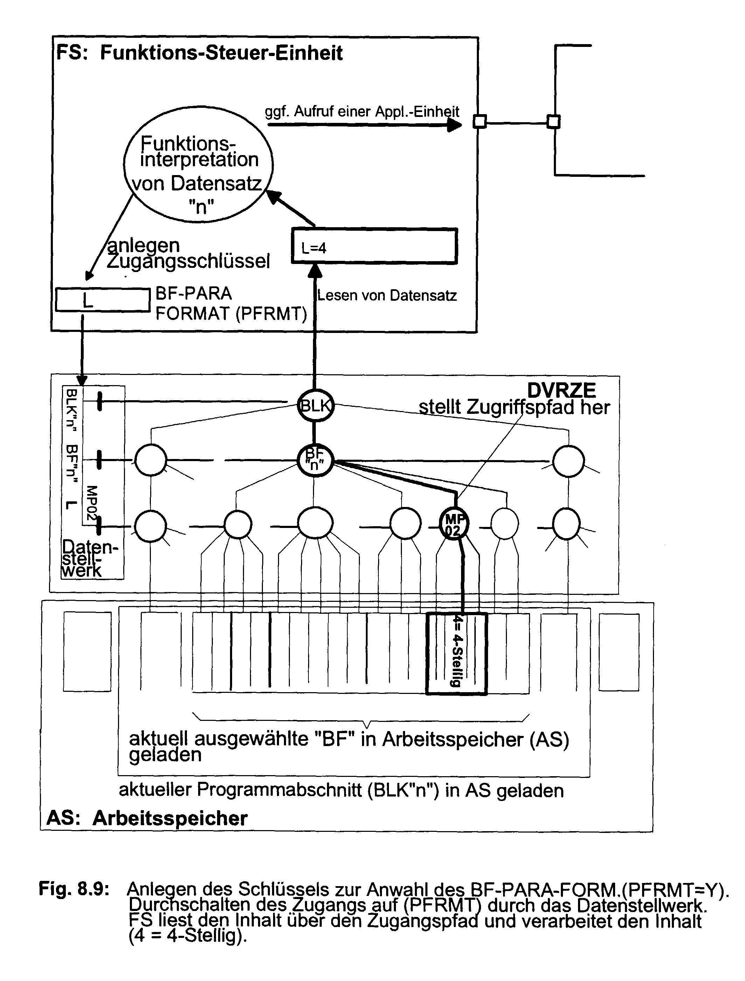

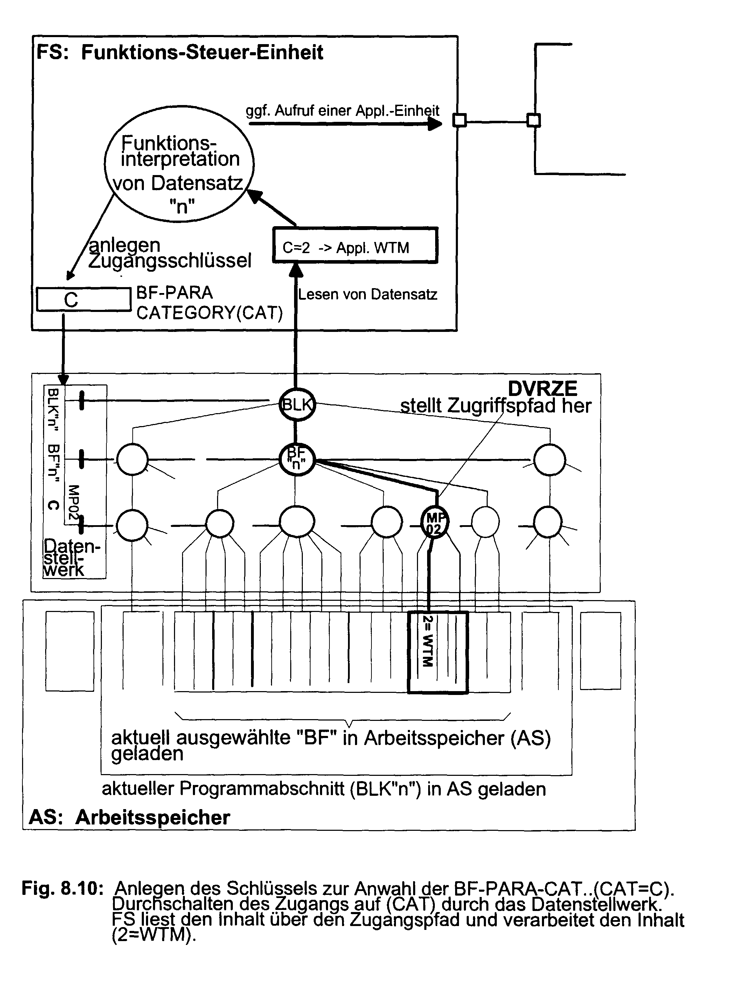

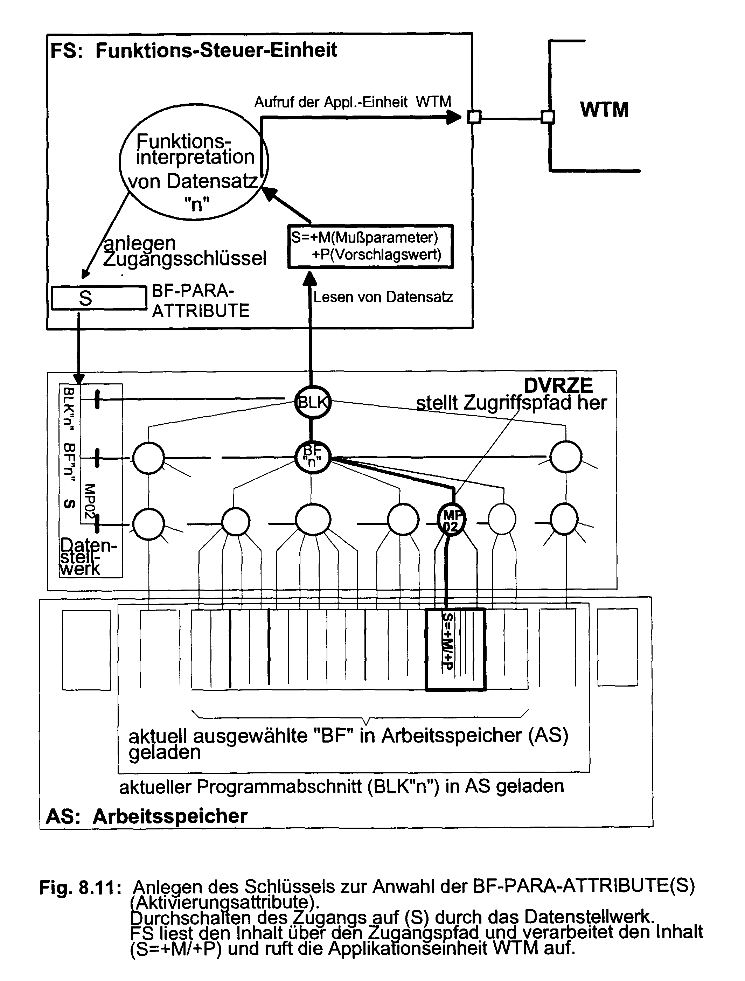

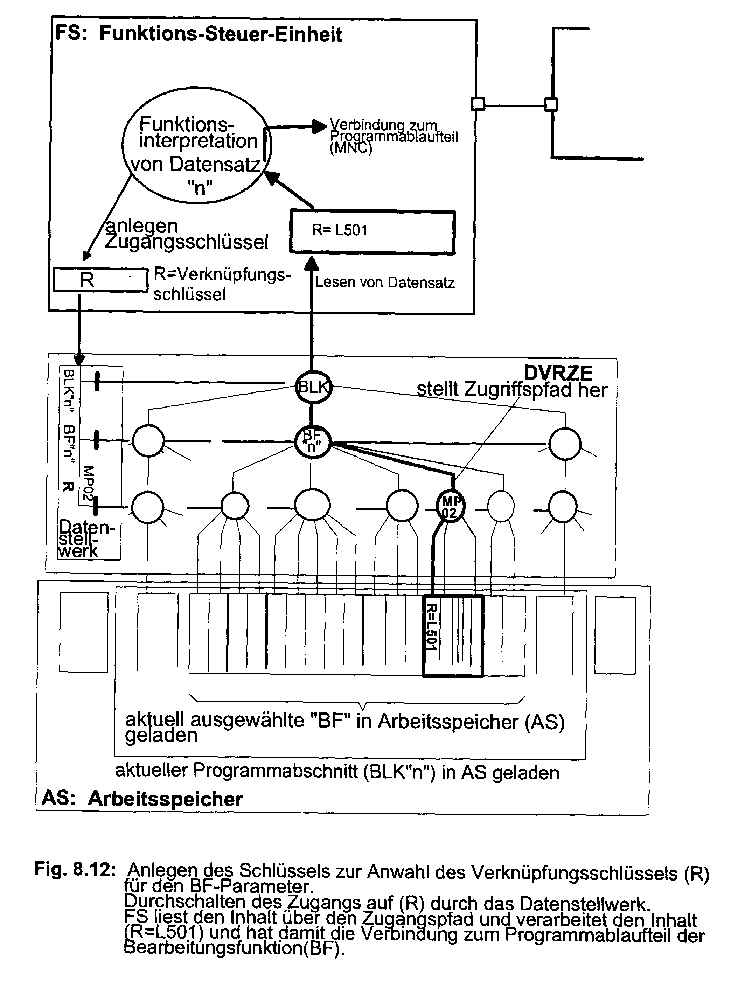

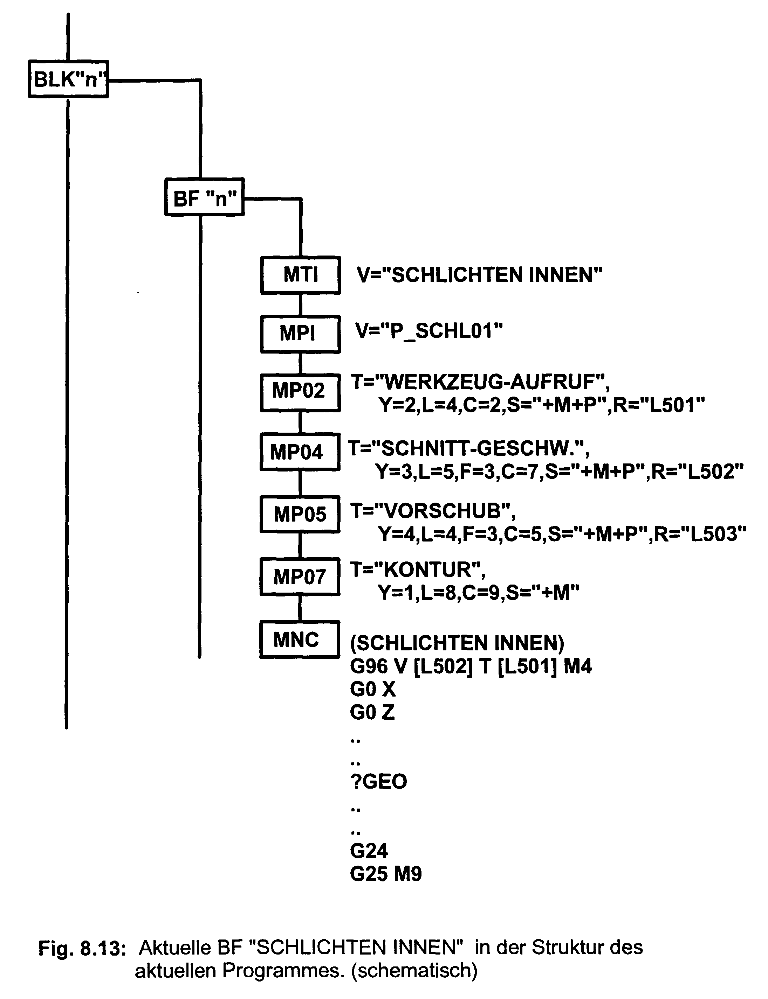

Wird von einer Funktionseinheit ein Datenzugriff benötigt, so legt diese Funktionseinheit den Schlüssel für den gewünschten Datensatz an. Die Daten-Vorwärts-Rückwärts-Zugriffs-Einheit (DVRZE) ermittelt über diesen Zugangsschlüssel den entsprechenden Datensatz und stellt über das Datenstellwerk (DSW) den Zugang her. (Fig.8)

Durch die erfindungsgemäße Ausprägung der Funktionsbeschreibungseinheit (FB) und der Funktionssteuereinheit (FS) sowie durch die erfindungsgemäße Anordnung und Funktion der Daten-Vorwärts-Rückwärts-Zugriffs-Einheit (DVRZE) wird eine Trennung der Funktionsbeschreibungseinheit und der Funktionssteuereinheit erreicht, wodurch die Beschreibung von Bearbeitungsfunktionen (BF) in der Funktionsbeschreibungseinheit (FB) ohne Rückwirkung auf andere Funktionseinheiten (z.B. auf die Funktionssteuereinheit) ermöglicht wird.

Der Anwender ist also völlig frei in der Beschreibung von Dialog- und Ablaufteil seiner Bearbeitungsfunktionen und somit bei der Festlegung oder Erweiterung des funktionalen Umfangs des Programmiersystemes.

Ein im Programmiersystem erstelltes Programm wird von der Daten-Vorwärts-Rückwärts-Zugriffs-Einheit (DVRZE) sofort nach der Eingabe einer jeden Bearbeitungsfunktion in die Teildaten Maschinensteuerdaten und Dialogsteuerdaten aufgetrennt.

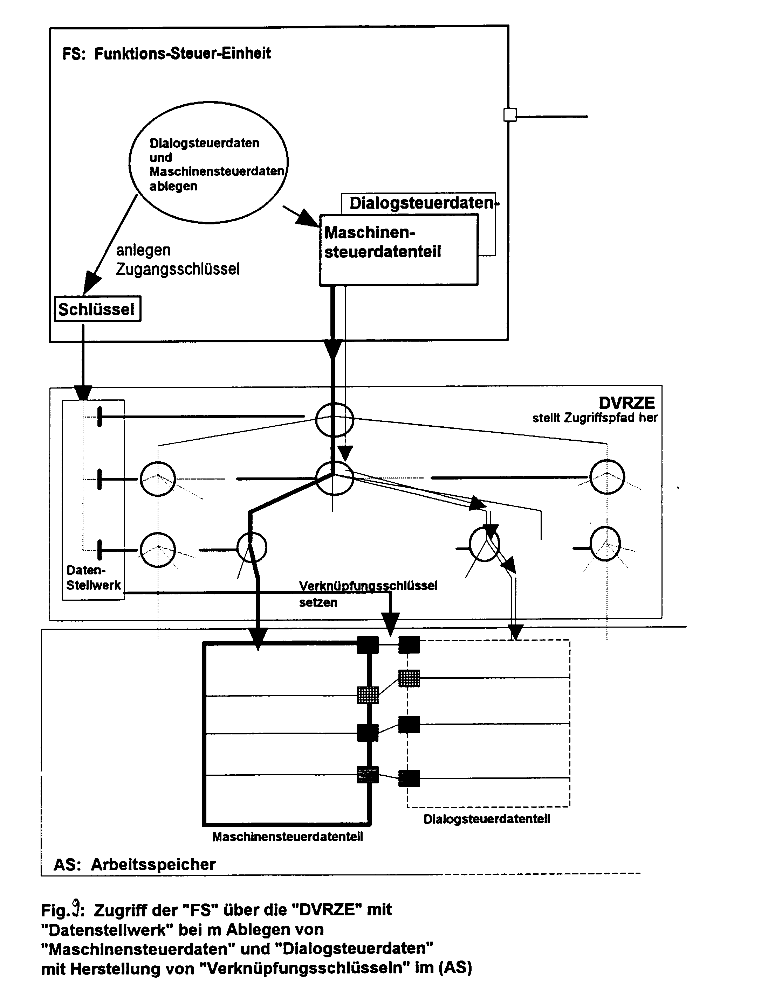

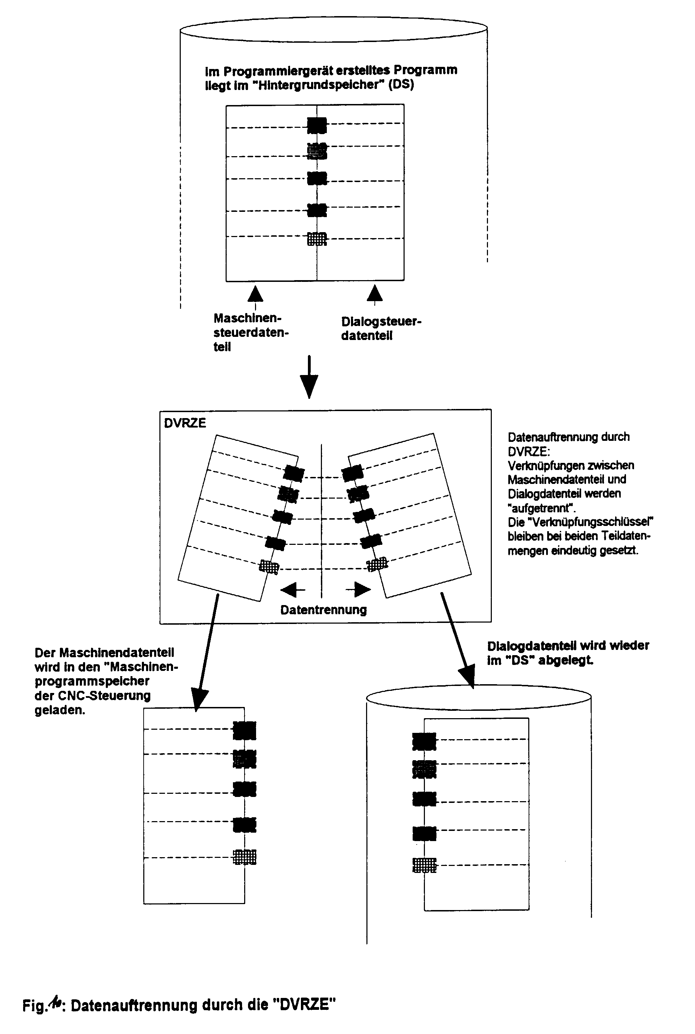

Die Daten-Vorwärts-Rückwärts-Zugriffs-Einheit (DVRZE) setzt zu diesem Zweck "Verknüpfungsschlüssel" an den relevanten Stellen des Maschinensteuerdatenteils und dem Dialogdatenteil ein. Durch diese Verknüpfungsschlüssel wird eine eindeutige Verbindung hergestellt. (Fig.9)

Man erkennt, daß durch diese Funktionsausprägung der Daten-Vorwärts-Rückwärts-Zugriffs-Einheit (DVRZE) Dialogsteuerdaten und Maschinensteuerdaten (Maschinensteuerprogramm im G-Code) zu jedem Zeitpunkt des Programmiervorganges vorliegen. Es ist somit möglich, daß Eingaben zur Programmerstellung oder zur Programmänderung jederzeit beliebig in den Ebenen "Dialoggeführt", "graphisch interaktiv" oder direkt im Maschinensteuerdatenteil (im G-Code) durchgeführt werden können.

Selbst manuell im Maschinensteuerdatenteil im G-Code eingegebene Programmabschnitte können von der "Applikationseinheit" GEO gelesen graphisch dargestellt und graphisch interaktiv weiterverarbeitet werden.

Vom Anwender müssen dazu die Zugriffsschlüssel für Start und Ende des Programmabschnitts im Maschinensteuerdatenteil eingegeben werden.

Der Zugriff für die Applikationseinheit (GEO) oder auf ander Applikationseinheiten wird dann von der Daten-VorwärtsRückwärts-Zugriffs-Einheit(DVRZE) über diese Zugriffsschlüssel hergestellt.

Für die Steuerung der Maschine trennt nach Abschluß des Programmiervorganges die Daten-Vorwärts-Rückwärts-Zugriffs-Einheit (DVRZE) die Verbindungen über die Verknüpfungsschlüssel auf. Die Verknüpfungspunkte bleiben dabei sowohl beim maschinensteuerdatenteils als auch beim Dialogdatenteil durch die Verknüpfungsschlüssel eindeutig erhalten. Der Maschinensteuerdatenteil wird als Maschinenprogramm in den Speicher der Maschinensteuerung geladen und wird von der Steuerung abgearbeitet.

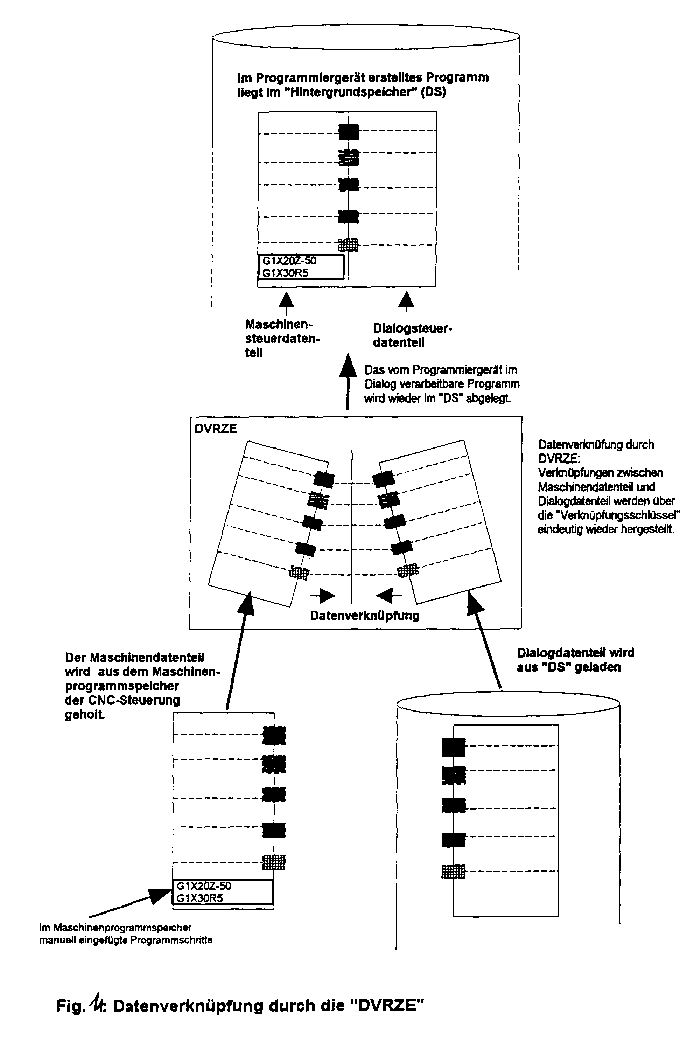

Für die Steuerung der Maschine trennt nach Abschluß des Programmiervorganges die Daten-Vorwärts-Rückwärts-Zugriffs-Einheit (DVRZE) die Verbindungen über die Verknüpfungsschlüssel auf. Die Verknüpfungspunkte bleiben dabei sowohl beim Maschinensteuerdatenteil als auch beim Dialogdatenteil durch die Verknüpfungsschlüssel eindeutig erhalten. Der Maschinensteuerdatenteil wird als Maschinenprogramm in den Speicher der Maschinensteuerung geladen und wird von der Steuerung abgearbeitet. Man erkennt, daß durch diese Lösung die Notwendigkeit eines Übersetzungslaufes und die damit verbundenen Datenreduktion zur Erzeugung des Maschinenprogrammes entfällt. (Fig.10) Betrachtet man das durch die Auftrennung entstandene Maschinenprogramm, so wird klar, daß Änderungen in diesem Maschinenprogramm eindeutig in das Programmiersystem zurückgeführt werden können und dort im Dialog zur Verfügung stehen (siehe Fig.ll). Die Daten-Vorwärts-Rückwärts-Zugriffs-Einheit(DVRZE) stellt die eindeutige Verbindung zum Dialogdatenteil über die Verknüpfungsschlüssel bei der Rückübertragung des Maschinendatenteils ins Programmiersystem wieder her.

Erläuterung der Funktionsweise der Funktionsbeschreibungseinheit an einem Beispiel für die Beschreibung einer Bearbeitungsfunktion (BF).

Zur Festlegung der funktionellen Möglichkeiten des Programmiersystemes ist erfindungsgemäß die sogenannte Funktionsbeschreibungseinheit angeordnet. Mit dieser Funktionsbeschreibungseinheit (FB) werden Bearbeitungsfunktionen (BF) bezüglich Eingabedialog und bezüglich des gewünschten Maschinenablaufes, welcher bei der Verwendung der Bearbeitungsfunktion (BF) während der Programmerstellung für die Steuerung des Bearbeitungsprozesses zur Anwendung kommen soll, beschrieben.

Solche Bearbeitungsfunktionen sind zum Beispiel
SCHLICHTEN AUSSEN
BOHRMUSTER AUSSERMITTIG
SECHSKANT FRÄSEN
SCHRUPPEN INNEN

Diese können mit der Funktionsbeschreibungseinheit frei vom Anwender erstellt werden, und stehen dann für der späteren Programmerstellungsvorgang, bei dem der Bearbeitungsprozeß zur Fertigung eines Werkstückes programmiert wird, im Programmiersystem zur Verfügung.

Die Bearbeitungsfunktionen werden einmal entsprechend den speziellen Anforderungen beim Anwender erstellt und können später beliebig oft und in beliebiger Kombination für die Erstellung von Programmen verwendet werden.

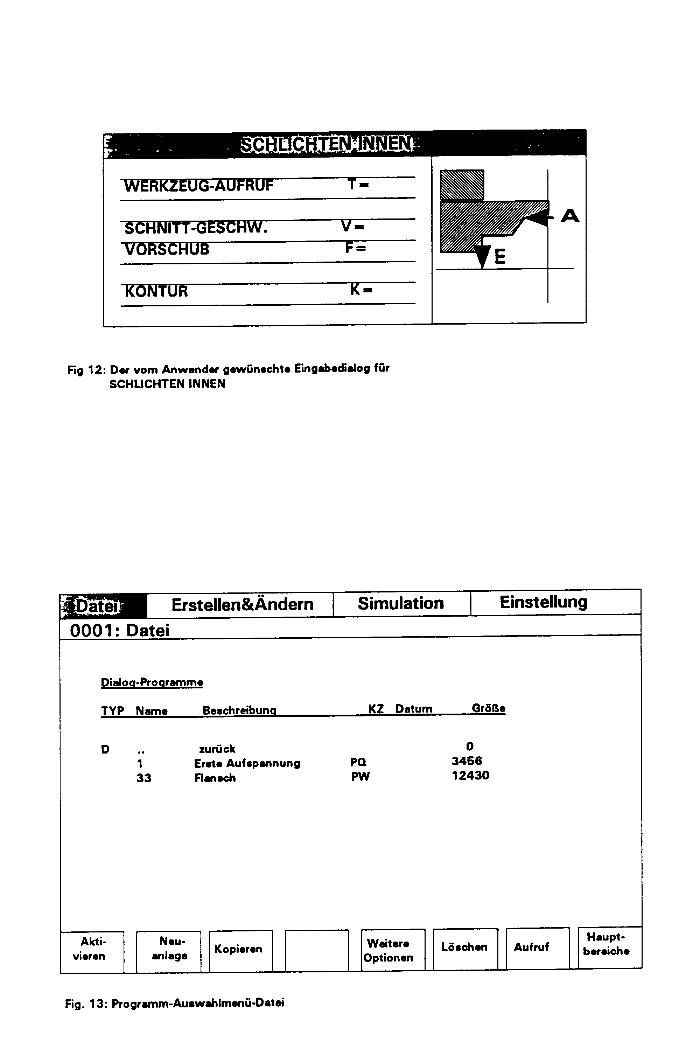

Das Programmiersystem ist somit im Funktionsumfang beliebig vom Anwender erweiterbar und anpaßbar. Zur Erläuterung der Funktionsweise der Funktionsbeschreibungseinheit (FB) ist im folgenden die Erstellung der Bearbeitungsfunktion (BF) mit dem Titel "SCHLICHTEN INNEN" beschrieben. Der vom Anwender gewünschte Eingabedialog ist in Fig.12 dargestellt.

### Funktionsablauf:

1 - Auswahl der Funktion Neuanlage in der Funktionsbeschreibungseinheit (FB)
2 - Die Funktionsbeschreibungseinheit (FB) fordert vom Anwender (A) die Eingabe von Verwaltungsinformationen an ( z.B. Erstellungsdatum, Name der Erstellers ...)
3 - Der Anwender (A) gibt diese Informationen ein und bestätigt die Eingaben mit der INPUT-Taste.
4 - Die Funktionsbeschreibungseinheit (FB) fordert die Eingabe des Funktionstitels an.
5 - Der Anwender (A) gibt den Titel "SCHLICHTEN INNEN" ein und bestätigt mit der INPUT-Taste
6 - Die Funktionsbeschreibungseinheit (FB) legt den Datensatz ab und aktiviert die Zugangsmöglichkeit über den Schlüssel (BFTITL). Damit hat die Funktionssteuereinheit (FS) später über die Daten-Vorwärts-Rückwärts-Zugriffs-Einheit (DVRZE) Zugang auf diesen Datensatz durch Anlegen des Schlüssels (BFTITL) an die Daten-Vorwärts-Rückwärts-Zugriffs-Einheit (DVRZE).
7 - Die Funktionsbeschreibungseinheit (FB) fordert die Eingabe für den Pictogrammtitel an.
8 - Der Anwender (A) gibt den Pictogrammtitel ein und bestätigt die Eingabe mit der INPUT-Taste.
9 - Die Funktionsbeschreibungseinheit (FB) legt den Datensatz Pictogrammtitel ab und aktiviert die Zugangsmöglichkeit über den Schlüssel PICTITL.
10- Die Funktionsbeschreibungseinheit (FB) fordert die Eingabe der Position (POS), den Titel des 1. Parameters (PTITL), den TYP (PTYP) und das Format (PFRMT) an.
11- Der Anwender (A) gibt für POS = 2 und den PTITL "WERKZEUG-AUFRUF", für TYP INT (Festkomma), für das Format 4 (4stellig) ein und bestätigt die Eingabe durch die Taste INPUT.
12- Die Funktionsbeschreibungseinheit (FB) legt den Datensatz ab und aktiviert den Zugang über die Schlüssel BFPARA, PTITL, PTYP und PFRMT.
13- Die Funktionsbeschreibungseinheit (FB) startet die Aktivierungseinheit, diese legt die möglichen Applikationsfunktionen zur Auswahl vor.
14- Der Anwender (A) wählt die Appl.-Fkt. WTM (Werkzeugverwaltung) und bestätigt durch die Taste INPUT.
15- Die Funktionsbeschreibungseinheit (FB) aktiviert den Zugang auf die Funktionskategorie (CAT) und die Aktivierungseinheit (Ä) aktiviert die Applikationsfunktion WTM.
16- Die Funktionsbeschreibungseinheit (FB) fordert die Eingabe der Position (POS), den Titel des 2. Parameters (PTITL), den TYP (PTYP) und das Format (PFRMT) an.
17- Der Anwender (A) gibt für POS = 4 und für den Titel des 2. Parameters (PTITL) "SCHNITT-GESCHW.", für TYP GLK (Gleitkomma), für das Format 4.3 (4Vorkomma ,3Nachkomma) ein und bestätigt die Eingabe durch die Taste INPUT.
18- Die Funktionsbeschreibungseinheit (FB) legt den Datensatz ab und aktiviert den Zugang über die Schlüssel BFPARA, PTITL, PTYP und PFRMT.
19- Die Funktionsbeschreibungseinheit (FB) startet die Aktivierungseinheit (Ä), diese legt die möglichen Applikationsfunktionen zur Auswahl vor.
20- Der Anwender (A) wählt die Applikationsfunktion TTM-SCHNITT (Technologie-Tabellen-Modul) und bestätigt die Auswahl durch die Taste INPUT.
21- Die Funktionsbeschreibungseinheit (FB) aktiviert den Zugang auf die Funktionskategorie (CAT) und die Aktivierungseinheit (Ä) aktiviert die Applikationsfunktion TTM.
22- Die Funktionsbeschreibungseinheit (FB) fordert die Eingabe der Position (POS), den Titel des 3. Parameters (PTITL), den TYP (PTYP) und das Format (PFRMT) an.
23- Der Anwender (A) gibt für POS = 5 und den Titel des 3. Parameters (PTITL) "VORSCHUB", für TYP GLK (Gleitkomma), für das Format 4.3 (4Vorkomma, 3Nachkomma) ein und bestätigt die Eingabe durch die Taste INPUT.
24- Die Funktionsbeschreibungseinheit (FB) legt den Datensatz ab und aktiviert den Zugang über die Schlüssel BFPARA, PTITL, PTYP und PFRMT.
25- Die Funktionsbeschreibungseinheit (FB) startet die Aktivierungseinheit (Ä), diese legt die möglichen Applikationsfunktionen zur Auswahl vor.
26- Der Anwender (A) wählt die Applikationsfunktion TTM-VORS (Technologie-Tabellen-Modul) und bestätigt die Auswahl durch die Taste INPUT.
27- Die Funktionsbeschreibungseinheit (FB) aktiviert den Zugang auf die Funktionskategorie (CAT) und die Aktivierungseinheit (Ä) aktiviert die Applikationsfunktion TTM.
28- Die Funktionsbeschreibungseinheit (FB) fordert die Eingabe der Position (POS), den Titel des 4. Parameters (PTITL), den TYP (PTYP) und das Format (PFRMT) an.
29- Der Anwender (A) gibt für POS = 7 und den PTITL "KONTUR", für TYP TXT (Texteingabe), für das Format 8 ( 4Stellen ) ein und bestätigt die Eingabe durch die Taste (INPUT).
30- Die Funktionsbeschreibungseinheit (FB) legt den Datensatz ab und aktiviert den Zugang über die Schlüssel BFPARA, PTITL, PTYP und PFRMT.
31- Die Funktionsbeschreibungseinheit (FB) startet die Aktivierungseinheit, diese legt die möglichen Applikationsfunktionen zur Auswahl vor.
32- Der Anwender (A) wählt die Appl.-Fkt. GEO_KONT (Geometrieeditor) und bestätigt die Auswahl durch die Taste INPUT.
33- Die Funktionsbeschreibungseinheit (FB) aktiviert den Zugang auf die Funktionskategorie (CAT) und die Aktivierungseinheit (Ä) aktiviert die Applikationsfunktion GEO. Damit wird bei Drücken der Taste "Aufruf" auf diesem Parameter bei der Programmierung der Geometrieeditor durch die Funktionssteuereinheit gestartet und dem Anwender der Eingabedialog zur graphisch interaktiven Beschreibung der Schlichtkontur angeboten.
34- Die Funktionsbeschreibungseinheit (FB) fordert die Eingabe des gewünschten Programmablaufes(ABLAUF) an.
35- Der Anwender (A) gibt den Programmablauf mit dem Applikationsknoten für (GEO) ein und bestätigt die Eingabe durch die Taste INPUT.
36- Die Funktionsbeschreibungseinheit (FB) legt den Datensatz für den Programmablauf ab und aktiviert den Zugang über den Schlüssel NC und den Zugang auf den Applikationsknoten GEO mit Schlüssel GEO-K. Die Applikationseinheit legt die Bearbeitungskontur über den Zugangsschlüssel GEO-K ab.

Mit diesem Schritt ist die gewünschte Bearbeitungsfunktion fertiggestellt. Der Anwender verläßt die Funktionsbeschreibungseinheit.

Nachstehend wird die Funktionsweise der Funktionssteuereinheit in Verbindung mit der Daten-Vorwärts-Rückwärts-Zugriffs-Einheit(DVRZE) und den Applikationseinheiten WTM, TTM und GEO erläutert (siehe Fig.13 ff).

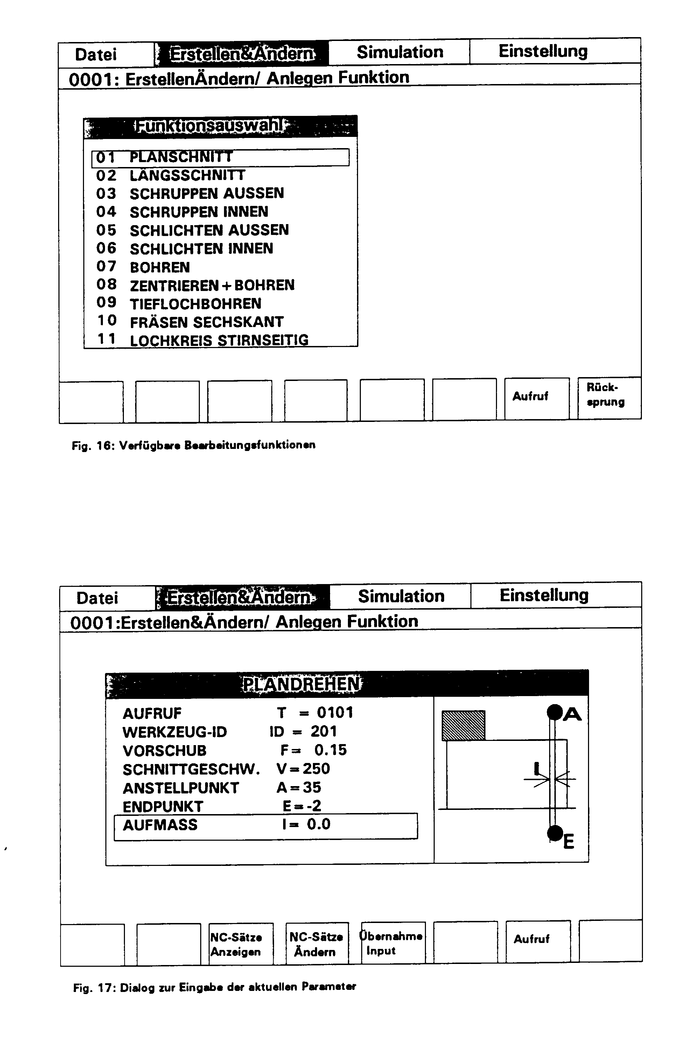

Beim Erstellen eines Programmes für den Bearbeitungsprozeß zur Erzeugung eines Werkstückes werden dem Anwender alle zu irgend einem früheren Zeitpunkt in der Funktionsbeschreibungseinheit (FB) definierten Bearbeitungsfunktionen (BF) zur Auswahl vorgelegt. Der Anwender selektiert nacheinander die für den Bearbeitungsprozeß benötigten Bearbeitungsfunktionen (BF) in der für den Bearbeitungsprozeß benötigten Reihenfolge und gibt über den Eingabedialog, der entsprechend den Bearbeitungsfunktionen (BF) von der Funktionssteuereinheit angeboten wird, die noch geforderten Daten ein (siehe Fig.15-18). Als Ergebnis erhält er z.B. das folgende Bearbeitungsprogramm:
PLANDREHEN
SCHRUPPEN AUSSEN
BOHREN
SCHRUPPEN INNEN
SCHLICHTEN INNEN
GEWINDE STREHLEN

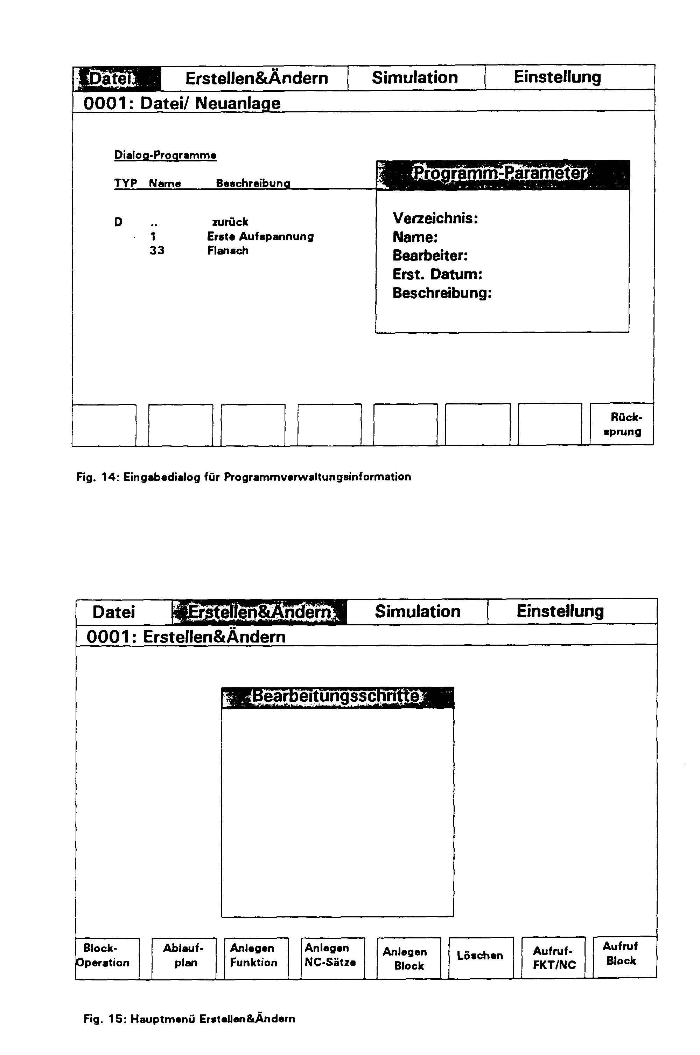

Die genaue Funktionsweise der Funktionssteuereinheit(FS) in Verbindung mit der Daten-Vorwärts-Rückwärts-Zugriffs-Einheit(DVRZE) und den Applikationseinheiten WTM, TTM und GEO wird am Beispiel für die Auswahl der Bearbeitungsfunktionen für ein aktuelles Programmierbeispiel erläutert.
1- Der Anwender (A) startet das Programmiersystem und erhält das Programmauswahlmenü "Datei" vorgelegt. (Fig.13)
2- Der Anwender (A) erhält nach Drücken der Funktionstaste "Neuanlage" den Eingabedialog zur Festlegung der Programm verwaltungsinformationen vorgelegt. (Fig.14)
3- Der Anwender (A) gibt "Programmnummer", sowie ggf. "Bearbeiterkurzzeichen","Erstellungsdatum" und "Kurzbeschreibung" für das zu erstellende Programm ein.
4- Der Anwender (A) bestätigt die Eingaben mit "Input". Die Funktionssteuereinheit (FS) legt dann das Hauptmenü "Erstellen & Ändern" zur Festlegung des Programmablaufes vor. (Fig.15)
5- Der Anwender (A) erhält bei Drücken der Funktionstaste "Anfügen Funktion" alle in der Funktionsbeschreibungseinheit einmal festgelegten Bearbeitungsfunktionen (BF) zur Auswahl vorgelegt. (Fig.16)
6- Der Anwender (A) wählt die zum aktuellen Programm benötigten Bearbeitungsfunktionen (BF) in der benötigten Reihenfolge aus und gibt bei den durch die zur Bearbeitungsfunktionen (BF) gehörenden Dialoge, welche von der "Funktionssteuereinheit" vorgelegt werden, die zum aktuellen Programm benötigten Informationen und Parameter ein (siehe Fig.17).

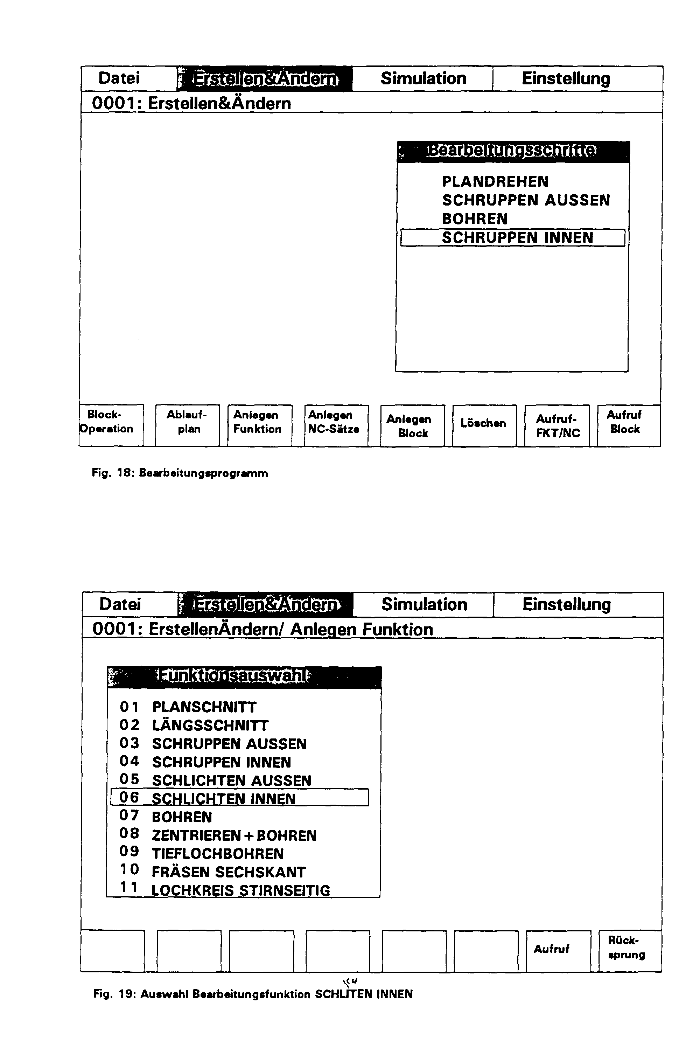

Nachstehend wird der Ablauf bei Auswahl und Parametrisierung der (BF) "SCHLICHTEN INNEN" erläutert.
7- Nach der Auswahl der Bearbeitungsfunktion(BF) "SCHLICHTEN INNEN" (Fig.19) mit Taste "Input" wird die Bearbeitungsfunktion von der Daten-Vorwärts-Rückwärts-Zugriffs-Einheit(DVRZE) eingelesen. Die mit der Funktionsbeschreibungeinheit in verschlüsselter Form erstellte Bearbeitungsfunktion wird dabei über die entsprechenden Schlüssel in Dialogsteuerdatenteil und in den wertfreien Maschinensteuerdatenteil aufgetrennt und für die Funktionssteuereinheit im Arbeitsspeicher des Programmiersystemes zur Verfügung gestellt.
8- Die Dialogsteuerdaten werden jetzt von der Funktionssteuereinheit (FS) Schritt für Schritt interpretiert (abgearbeitet). Der Zugriff auf die Daten erfolgt dabei wiederum über die Daten-Vorwärts-Rückwärts-Zugriffs-Einheit(DVRZE). Diese stellt den Zugang auf die einzelnen Datensätze über die von der Funktionssteuereinheit (FS) nacheinander angelegten Schüssel her. Die Daten-Vorwärts-Rückwärts-Zugriffs-Einheit (DVRZE) stellt entsprechend der angelegten Schlüssel sogenannte Datenweichen so, daß die Funktionssteuereinheit über den so hergestellten Datenpfad direkten Zugriff auf den mit dem jeweiligen Schlüssel ausgewählten Datensatz erhält. Die Funktionssteuereinheit benötigt dabei keine Kenntnis über Ort und Reihenfolge der angesprochenen Datensätze, da die Daten-Vorwärts-Rückwärts-Zugriffs-Einheit (DVRZE) entsprechend einem Datenstellwerk auf einem Datenrangierbahnhof die Zugangsweichen stellt und den Zugriff herstellt. Durch diese erfindungsgemäße Anordnung und Ausprägung der Daten-Vorwärts-Rückwärts-Zugriffs-Einheit (DVRZE) ist es möglich, daß Bearbeitungsfunktionen(BF) vom Anwender mit der Funktionsbeschreibungseinheit (FB) bezüglich des Aufbaus des Eingabedialoges und des gewünschten Maschinenablaufes, beliebig frei nach seinen Anforderungen festgelegt werden können. Der Anwender hat dadurch keine Einschränkungen bezüglich Aussehen, Funktion, Typ und Position eines Eingabeparameters in dem zu seiner Bearbeitungsfunktion (BF) gehörenden Eingabedialog.

### Interpretationsvorgang der Funktionssteuereinheit (FS)

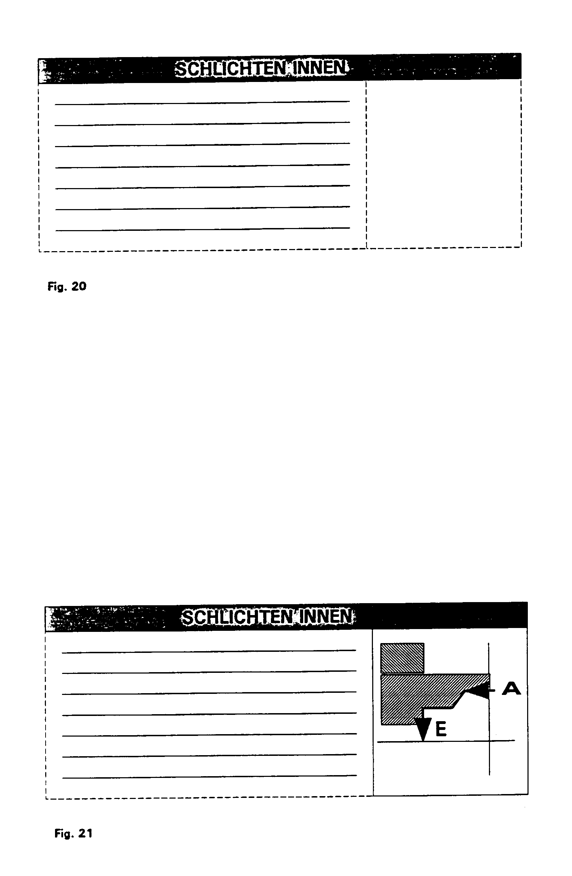

9- Nach Auswahl der Bearbeitungsfunktion (BF) "SCHLICHTEN INNEN" legt die Funktionssteuereinheit (FS) den Schlüssel für den Bearbeitungstitel (BFTITL) an der Daten-VorwärtsRückwärts-Zugriffs-Einheit(DVRZE) an. Die Daten-VorwärtsRückwärts-Zugriffs-Einheit(DVRZE) stellt den Datenzugang her. Die unktionssteuereinheit holt über den Datenpfad den Bearbeitungstitel und erstellt das Eingabefenster mit dem Bearbeitungsfunktionstitel "SCHLICHTEN INNEN". (Fig.20)
10- Die Funktionssteuereinheit (FS) legt den Schlüssel für das gewünschte Pictogramm (PICTITL) an. Die Daten-VorwärtsRückwärts-Zugriffs-Einheit(DVRZE) stell den Datenzugang auf den Pictogrammtitel her. Die Funktionssteuereinheit holt über den hergestellten Datenpfad die Daten für das Pictogramm und erzeugt dieses im Eingabefenster für die Bearbeitungsfunktion (BF)

### SCHLICHTEN INNEN. (Fig.21)

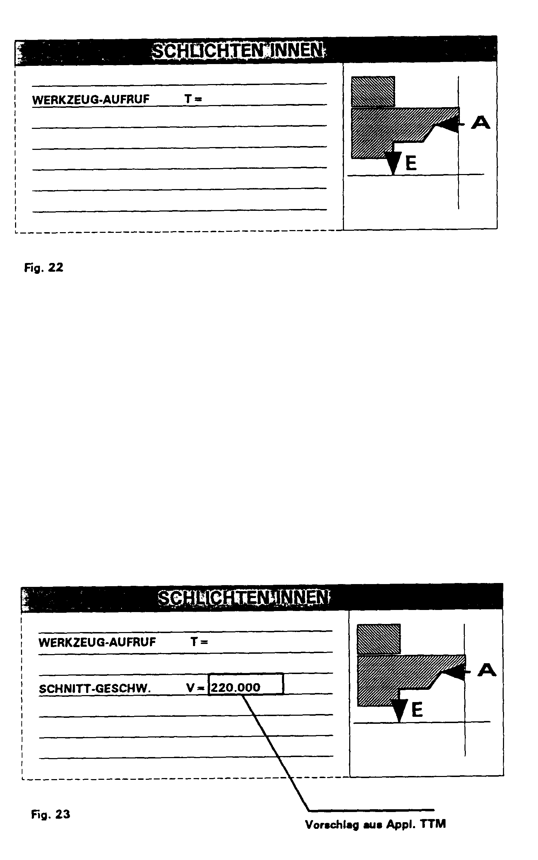

11-Die Funktionssteuereinheit (FS) legt jetzt den Schlüssel für einen Eingabeparameter (BFPARA) an. Die Daten-VorwärtsRückwärts-Zugriffs-Einheit(DVRZE) stellt durch das Stellwerk den Zugang auf den 1. Parameter her. Die Funktionssteuereinheit(FS) legt jetzt den Schlüssel für die Positionsinformtion des Parameters im Eingabefenster an. Die Daten-Vorwärts-Rückwärts-Zugriffs-Einheit (DVRZE) stellt durch das Datenstellwerk (DSW) den Zugang auf diesen Datensatz her. Die Funktionssteuereinheit (FS) holt die Positionsinformation 2 (Zeile 2). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("WERKZEUG-AUFRUF"). Die Funktionssteuereinheit (FS) legt nacheinander die Schlüssel für den Zugriff auf die Datensätze Parametertyp(PTYP), Parameterformat(PFRMT) und den Zugangsschlüssel auf die Funktionskategorie(CAT) an und holt die Zugehörigen Datensätze PTYP=INT, PFRMT=4(4-stellig) und für die Funktionskategorie CAT=WTM und baut den Parameter im Eingabefenster entsprechend dieser Datensätze auf. (Fig.22) Die Funktionssteuereinheit (FS) erkennt dann nach Prüfung des Datensatzes CAT, daß die Applikationseinheit WTM (Werkzeugverwaltungsmodul) für diesen Parameter aktiviert ist und startet die Applikationseinheit WTM ggf. dann, wenn der Anwender den Parameter im Eingabefenster angewählt hat und die Funktionstaste "Aufruf" drückt. Er erhält dann den Auswahl- und Eingabedialog für die Applikationeinheit Werkzeugverwaltungsmodul vorgelegt und kann ein für die Bearbeitung geeignetes Werkzeug auswählen.
12-Die Funktionssteuereinheit (FS) legt jetzt den Schlüssel für den nächsten Eingabeparameter (BFPARA) an. Die Daten-Vorwärts-Rückwärts-Zugriffs-Einheit (DVRZE) stellt durch das Stellwerk den Zugang auf den 2. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 4 (Zeile 4). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her.

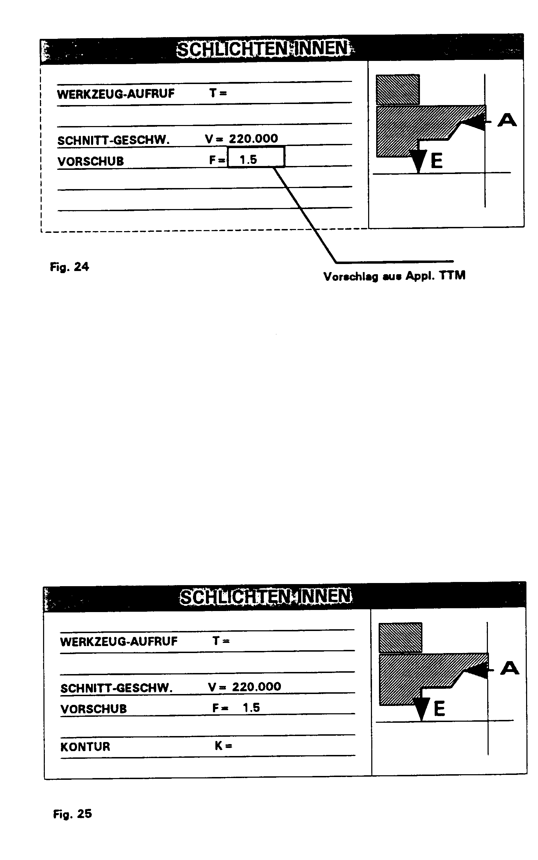

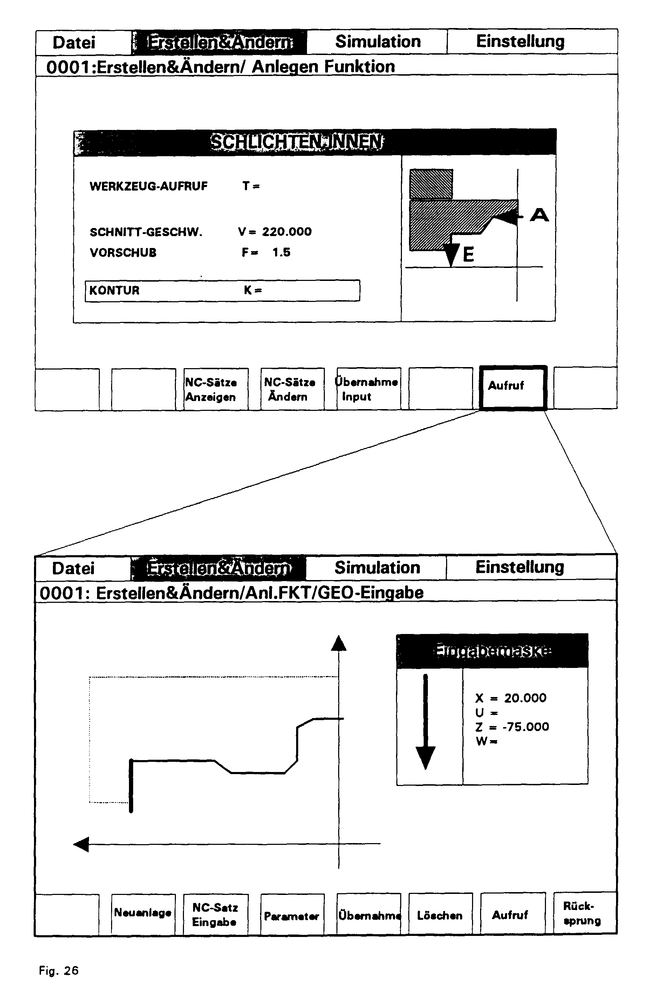

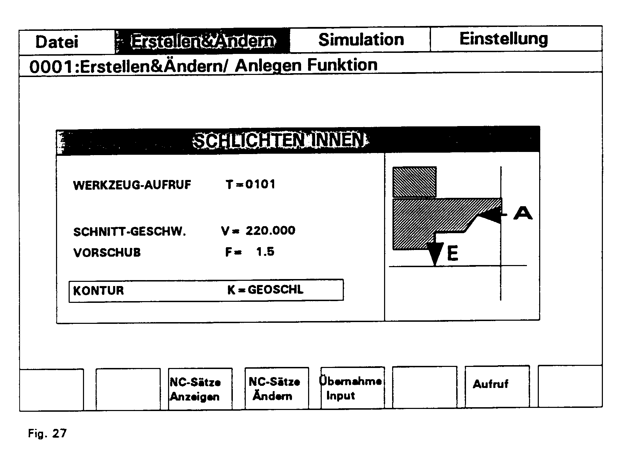

Die Funktionssteuereinheit (FS) holt über die Verbindung den Datensatz für den Parametertitel ("SCHNITT-GESCHW."). Die Funktionssteuereinheit (FS) legt nacheinander die Schlüssel für den Zugriff auf die Datensätze Parametertyp (PTYP), Parameterformat (PFRMT) und den Zugangsschlüssel auf die Funktionskategorie(CAT) an und holt die Zugehörigen Datensätze PTYP=GLK(Gleitkomma), PFRMT=4.3(4-Vorkomma-, 3-Nachkommastellen) und für die Funktionskategorie CAT=TTM_SCHNITT und baut den Parameter im Eingabefenster entsprechend dieser Datensätze auf. Die Funktionssteuereinheit (FS) erkennt dann nach Prüfung des Datensatzes CAT=TTM_SCHNITT, daß die Applikationseinheit "Technologie-Tabellen-Modul - Schnittgeschwindigkeit(TTM_SCHNITT)" für diesen Parameter aktiviert ist und startet die entsprechende Applikationseinheit. Die Funktionssteuereinheit startet nun die Applikationseinheit TTM, diese ermittelt die Schnittgeschwindigkeit und legt den entsprechenden Wert im Eingabefeld des Parameters als Vorschlag vor. (Fig.23)
13-Die Funktionssteuereinheit (FS) legt jetzt den Schlüssel für den nächsten Eingabeparameter (BFPARA) an. Die Daten-Vorwärts-Rückwärts-Zugriffs-Einheit(DVRZE) stellt durch das Stellwerk den Zugang auf den 3. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 5 (Zeile 5). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("VORSCHUB"). Die Funktionssteuereinheit (FS) legt nacheinander die Schlüssel für den Zugriff auf die Datensätze Parametertyp(PTYP), Parameterformat(PFRMT) und den Zugangsschlüssel auf die Funktionskategorie(CAT) an und holt die zugehörigen Datensätze PTYP=GLK(Gleitkomma), PFRMT=4.3(4-Vorkomma-, 3-Nachkommastellen) und für die Funktionskategorie CAT=TTM_VORS und baut den Parameter im Eingabefenster entsprechend dieser "Datensätze" auf. Die Funktionssteuereinheit (FS) erkennt dann nach Prüfung des Datensatzes CAT=TTM_VORS, daß die Applikationseinheit "Technologie-Tabellen-Modul - Vorschub (TTM_VORS)" für diesen Parameter aktiviert ist und startet die jeweilige Applikationseinheit. Die Funktionssteuereinheit (FS) startet nun die Applikationseinheit TTM, diese ermittelt die Vorschub und legt den entsprechenden Wert im Eingabefeld des Parameters als Vorschlag vor. (Fig.24)
14-Die Funktionssteuereinheit (FS) legt jetzt den Schlüssel für den nächsten Eingabeparameter (BFPARA) an. Die Daten-Vorwärts-Rückwärts-Zugriffs-Einheit(DVRZE) stellt durch das Stellwerk den Zugang auf den 4. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 7 (Zeile 7). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("KONTUR"). Die Funktionssteuereinheit (FS) legt nacheinander die Schlüssel für den Zugriff auf die Datensätze Parametertyp(PTYP), Parameterformat(PFRMT) und den Zugangsschlüssel auf die Funktionskategorie(CAT) an und holt die Zugehörigen Datensätze PTYP=TXT, PFRMT=8(8-stellig) und für die Funktionskategorie CAT=GEO_KONT und baut den Parameter im Eingabefenster entsprechend dieser Datensätze auf. (Fig.25) Die Funktionssteuereinheit (FS) erkennt dann nach Prüfung des Datensatzes CAT, daß die Applikationseinheit GEO (Geometrieeditor und Prozessor) für diesen Parameter aktiviert ist und startet die Applikationseinheit GEO ggf. dann, wenn der Anwender den Parameter im Eingabefenster angewählt hat und die Funktionstaste "Aufruf" drückt. Er erhält dann den Auswahl- und Eingabedialog für die Applikationeinheit Geometrieeditor und -Prozessor" vorgelegt und kann die für die Bearbeitung notwendige Schlichtkontur eingeben. (Fig.26)
15-Wurde in der Funktionsbeschreibungseinheit (FS) kein weiterer Parameter festgelegt, so erhält die Funktionssteuereinheit" (FS) nach dem Anlegen des Schlüssels für einen nächsten Parameter von der Daten-Vorwärts-Rückwärts-Zugriffs-Einheit (DVRZE) die Information "Kein weiterer Parameter verfügbar" (NO-MORE-PARA) zurück und erkennt, daß alle Dialogsteuerinformationen interpretiert sind. Am Bildschirm ist jetzt der komplette Eingabedialog für die ausgewählte Bearbeitungsfunktion (BF) (im Beispiel SCHLICHTEN INNEN) angezeigt und kann vom Anwender mit den aktuell notwendigen Informationen für die Steuerung des aktuell gewünschten Maschinenablaufes versehen werden. (Fig.27) Er gibt also das gewünschte Bearbeitungswerkzeug an, ändert ggf. noch Schnittgeschwindigkeit und Vorschub für die Werkzeugbewegung und gibt die nach der Teilezeichnung benötigte Bearbeitungskontur über den Geometrieeditor graphisch interaktiv ein.(Fig.26)
16-Nach Eingabe der Informationen bestätigt der Anwender seine Eingaben mit "INPUT". Die Funktionssteuereinheit (FS) legt die Informationen wieder über die Daten-Vorwärts-Rückwärts-Zugriffs-Einheit (DVRZE) im Speicher des Programmiersystemes ab. Es entsteht damit ein "nicht mehr wertfreies" Steuerprogramm das die Steuerung des Bearbeitungsprozesses an der Maschine eindeutig festlegt. Der Zugriff beim Ablegen (Schreiben) der Daten erfolgt wie beim Lesen der Informationen für die Bearbeitungsfunktion (BF) über die Daten-Vorwärts-Rückwärts-Zugriffs-Einheit(DVRZE). Die Funktionssteuerteinheit (FS) legt zu diesem Zweck die Zugangsschlüssel für die Position der Eingabeparameterdaten oder den Zugangsschlüssel für Ergebnisdaten der verschiedenen Applikationseinheiten, wie z.B. die Schlichtkontur als Ergebnis des Geometrieeditors und -Prozessors den Schlüssel GEO-K an. Die Daten werden durch die Daten-Vorwärts-Rückwärts-Zugriffs-Einheit (DVRZE) über diesen Zugang an die entsprechende Zielposition geschrieben. Durch diesen Schreibvorgang über das Datenstellwerk der Daten-Vorwärts-Rückwärts-Zugriffs-Einheit (DVRZE) wird ein mit dem Programmiersystem so erstelltes Programm sofort bei der Eingabe in die Teildaten Maschinensteuerdaten und die Teildaten Dialogsteuerdaten aufgeteilt. Zur eindeutigen Verbindung von Maschinensteuerdaten und Dialogsteuerdaten setzt die Daten-Vorwärts-Rückwärts-Zugriffs-Einheit (DVRZE) dabei die benötigten Verknüpfungsschlüssel. Soll das so erstellte Programm jetzt an der Maschine zur Ausführung kommen, so trennt die Daten-Vorwärts-Rückwärts-Zugriffs-Einheit (DVRZE) diese Verknüpfungsschlüssel auf und überträgt den Maschinensteuerdatenteil in den Maschinenprogrammspeicher der CNC-Steuerung der Maschine. (Datenauftrennung Fig.10) Es findet also nicht wie bei vorbekannten Autoprogrammiergeräten ein Übersetzungsvorgang (Compilierungslauf) zur Erzeugung des Maschinensteuerprogramms aus einem Quellprogramm und die damit zwangsläufig verbundene Datenreduktion statt. Der durch den Trennvorgang entstandene Maschinensteuerdatenteil kann vom Anwender im Programmspeicher der Maschinensteuerung geändert und optimiert werden.

Soll das geänderte Maschinenprogramm zu einem späteren Zeitpunkt im Dialog mit dem erfindungsgemäß realisierten Programmiersystem bearbeitet werden, so wird der Maschinendatenteil von der Daten-Vorwärts-Rückwärts-Zugriffs-Einheit (DVRZE) aus dem Maschinenprogrammspeicher der Steuerung geholt und über die eindeutigen Verknüpfungsschlüssel wieder mit dem zugehörigen Dialogdatenteil verbunden (Fig.10). Man erkennt sofort, daß durch diese technische Lösung durch die Funktion der Auftrennung und Zusammenführung innerhalb der Daten-Vorwärts-Rückwärts-Zugriffs-Einheit (DVRZE) über eindeutige Verknüpfungsschlüssel das Problem der Rückdokumentation von Maschinenprogrammänderungen gelöst ist.

## Patentansprüche

1. Dialogorientiertes Programmiersystem zur Erzeugung von Steuerungsprogrammen für eine CNC-Werkzeugmaschine, mit
- einer Dateneingabe- und Visualisierungseinrichtung (1, 2) zum Eingeben und/oder Ändern von Daten, die den gewünschten Funktions- und Steuerungsablauf der CNC-Werkzeugmaschine bestimmen;
- einer zentralen Speicher- und Verarbeitungseinheit (3), in der die eingegebenen Daten zu Steuerungsdaten für eine Maschinensteuerung der CNC-Werkzeugmaschine verarbeitet und als Steuerprogramm für die CNC-Werkzeugmaschine an deren Maschinensteuerung über eine Ein-/Ausgabeeinheit ausgegeben werden; wobei
- in der zentralen Speicher- und Verarbeitungseinheit (3) eine Funktionsbeschreibungseinheit (FB) zur Beschreibung des Bearbeitungs- und Dialogablaufes vorhanden ist, wobei der Funktionsbeschreibungseinheit (FB) eine Funktionssteuermatrix zusammen mit einer Ablaufbeschreibung eingegeben wird, und die Funktionssteuermatrix Informationen hinsichtlich der Vergabe und der Zuordnung von Programmparametern zu den gewünschten Funktionen der CNC-Werkzeugmaschine enthält;
- in der zentralen Speicher- und Verarbeitungseinheit (3) eine Funktionssteuereinheit (FS) enthalten ist, von der die in der Funktionsbeschreibungseinheit (FB) aufbereiteten Daten mit aktuellen Daten und/oder weiteren Applikationseinheiten (APPL, WTM, RTM, TTM, GEO) verbunden und verarbeitet werden; und
- in der zentralen Speicher- und Verarbeitungseinheit (3) aus den mit den aktuellen Daten und/oder den weiteren Applikationseinheiten (APPL, WTM, RTM, TTM, GEO, NNN) verbundenen aufbereiteten Daten ein dialogorientiertes Steuerprogramm für die CNC-Werkzeugmaschine erstellt wird,
**dadurch gekennzeichnet**, daß
- eine Daten-Vorwärts-Rückwärts-Zugriffs-Einheit (DVRZE) vorgesehen ist, die dazu eingerichtet ist, ein im Programmiersystem erstelltes Programm sofort nach der Eingabe einer jeden Bearbeitungsfunktion in die Teildaten Maschinensteuerdaten und Dialogsteuerdaten aufzutrennen und an den relevanten Stellen des Maschinensteuerdatenteils und des Dialogdatenteils Verknüpfungsschlüssel einzusetzen, durch die eine eindeutige Verbindung des Maschinensteuerdatenteils mit dem Dialogdatenteil herstellbar ist.

2. Dialogorientiertes Programmiersystem für eine CNC-Werkzeugmaschine nach Anspruch 1, dadurch gekennzeichnet, daß Zugriffe auf Daten und/oder Programm(-teile) in der zentralen Speicher- und Verarbeitungseinheit (1), in einem nicht-flüchtigen Hintergrundspeicher (6), oder in einem anderen Speicher des Programmiersystems durch die Daten-Vorwärts-Rückwärts-Zugriffs-Einheit (DVRZE) gesteuert werden, wobei Zugriffspfade auf die Daten und/oder die Programm(-teil)e in Abhängigkeit von von der Funktionssteuereinheit angelegten Zugriffsschlüsseln festgelegt und hergestellt werden.

3. Dialogorientiertes Programmiersystem für eine CNC-Werkzeugmaschine nach Anspruch 1 oder 2, dadurch gekennzeichnet, daß die zentrale Speicher- und Verarbeitungseinheit einen Systemprogrammspeicher, einen Arbeitsspeicher, und einen Parameterspeicher aufweist, wobei
- in dem Systemprogrammspeicher ein Bewegungs- und Ablaufprogramm mit allen Zusatzinformationen, sowie ein Quellprogramm gespeichert ist;
- in dem Arbeitsspeicher aktuell benötigte System- und Anwenderprogramme sowie die damit zu verarbeitenden Daten und Ergebnisse gespeichert sind; und
in dem Parameterspeicher die Adressen variabler Eingangs- und Steuerdaten gespeichert sind.

4. Dialogorientiertes Programmiersystem für eine CNC-Werkzeugmaschine nach Anspruch 1 - 3, dadurch gekennzeichnet, daß
- eine Aktivierungseinheit vorhanden ist, mit der gewünschte Funktionsattribute der Funktionseinheit in Verbindung mit den Applikationseinheiten zu einzelnen Parametern aktivierbar sind.

5. Dialogorientiertes Programmiersystem für eine CNC-Werkzeugmaschine nach Anspruch 1 - 3, dadurch gekennzeichnet, daß
- die Daten der Funktionsbeschreibungseinheit (FB) einer Steuerlistenerstellungseinheit (5) zugeführt werden.

6. Dialogorientiertes Programmiersystem für eine CNC-Werkzeugmaschine nach Anspruch 1 - 5, dadurch gekennzeichnet, daß
- eingegebene Funktionsattribute als (Zugriffs-)Schlüssel verwendet werden, die zur Auslösung eines Funktionsablaufes in der Funktionssteuereinheit in Verbindung mit den Applikationseinheiten führen.

7. Dialogorientiertes Programmiersystem für eine CNC-Werkzeugmaschine, nach einem oder mehreren der Ansprüche 1-6, dadurch gekennzeichnet, daß
- eine Datenbasis vorhanden ist, in der die eingegebenen Daten gemeinsam abgelegt werden, wobei die Datenbasis in einen Bereich für Maschinensteuerdaten und einen Bereich für Dialogsteuerdaten des Programmiersystems unterteilt ist;
- eine Funktionssteuereinheit vorhanden ist, um mit den eingegebenen Daten ein Steuerprogramm für die CNC-Werkzeugmaschine zu erstellen, wobei die Funktionssteuereinheit ein Datensteuerungsmodul aufweist, das den Zugriff auf die Maschinensteuerdaten und die Dialogsteuerdaten des Programmiersystems in der Datenbasis und deren Verwaltung ausführt; und
- das Steuerprogramm für die CNC-Werkzeugmaschine einen ersten Teil aufweist, der nur die für den Ablauf des Programms an der CNC-Werkzeugmaschine benötigten Ablaufdaten enthält, und einen zweiten Teil aufweist, der alle systembedingten Zusatzinformationen enthält.

8. Dialogorientiertes Programmiersystem für eine CNC-Werkzeugmaschine nach Anspruch 7, dadurch gekennzeichnet, daß das Datensteuerungsmodul den Zugriff und die Verwaltung sowohl in einer Dialogquellebene des Programms als auch in dem Steuerprogramm für die CNC-Werkzeugmaschine ausführt.

9. Dialogorientiertes Programmiersystem für eine CNC-Werkzeugmaschine nach Anspruch 7 oder 8, dadurch gekennzeichnet, daß das Datensteuerungsmodul die Ablaufdaten und die systembedingten Zusatzparameter zur Darstellung für den Anwender und zur Änderung zusammenführt und zur Ansteuerung der CNC-Werkzeugmaschine voneinander trennt.

10. Dialogorientiertes Programmiersystem für eine CNC-Werkzeugmaschine nach einem der Ansprüche 7 - 9, dadurch gekennzeichnet, daß der Funktionsablauf der CNC-Werkzeugmaschine als parametrisches Steuerprogramm beschrieben ist, bei dem zu einzelnen Funktionen der CNC-Werkzeugmaschine Parameter festgelegt sind.

11. Dialogorientiertes Programmiersystem für eine CNC-Werkzeugmaschine nach einem der Ansprüche 7 - 10, dadurch gekennzeichnet, daß die Parameter in Form einer Matrix abgelegt sind, wobei die Matrix eine Vielzahl von aktivierbaren Funktionsattributen enthält.

12. Dialogorientiertes Programmiersystem für eine CNC-Werkzeugmaschine nach Anspruch 11, dadurch gekennzeichnet, daß jedes Funktionsattribut zur Auslösung eines bestimmten Funktionsablaufes in der Funktionssteuereinheit in Verbindung mit den Applikationseinheiten dient.

13. Dialogorientiertes Programmiersystem für eine CNC-Werkzeugmaschine nach einem der Ansprüche 7 - 12, dadurch gekennzeichnet, daß Änderungen in dem Steuerprogramm für die CNC-Werkzeugmaschine durch das Datensteuerungsmodul in der Dialogquellebene des Programms ausgeführt werden.

14. Dialogorientiertes Programmiersystem für eine CNC-Werkzeugmaschine nach einem der Ansprüche 7 - 13, dadurch gekennzeichnet, daß das Datensteuerungsmodul Programmsätze des Steuerprogramms für die CNC-Werkzeugmaschine Teildatenmengen selektiert und in dem ersten Teil des Steuerprogramms, der nur die Ablaufdaten enthält, kennzeichnet.

15. Dialogorientiertes Programmiersystem für eine CNC-Werkzeugmaschine nach einem der Ansprüche 7 - 14, dadurch gekennzeichnet, daß Bearbeitungsfunktionen in der zentralen Speicher- und Verarbeitungseinheit (3) vorliegen, welche mit der Funktionsbeschreibungseinheit erstellt wurden und im Programmiersystem verfügbaren Funktionsumfang für den Programmiervorgang mit dem Programmiergerät darstellen, so daß der Funktionsumfang des Programmiersystems vom Anwender verändert und erweitert werden kann.

16. Programmiergerät nach Anspruch 15, dadurch gekennzeichnet, daß in der Funktionsbeschreibungseinheit eine Aktivierungseinheit vorhanden ist, welche aus den für die Bearbeitungsfunktionen eingegebenen Informationen ein Funktionssteuermatrix erstellt.

17. Programmiersystem nach den Ansprüchen 14 und 15, dadurch gekennzeichnet, daß in der Funktionsbeschreibungseinheit bei der Beschreibung von Bearbeitungsfunktionen eingegebene Daten beim Programmiervorgang über eine Eingabeeinheit (2) ausgewählt werden und einer Funktionssteuereinheit zugeführt werden und durch die Funktionssteuereinheit die zu einer Bearbeitungsfunktion gehörenden Eingabedialoge erzeugt und auf der Anzeigeeinheit (1) angezeigt werden.

18. Programmiersystem nach Anspruch 2, dadurch gekennzeichnet, daß die Daten-Vorwärts-Rückwärts-Zugriffs-Einheit (DVRZE) die Zugangsschlüssel selbständig erstellt, so daß den einzelnen Funktionseinheiten des Programmiersystems keine Informationen über den Aufbau einer Bearbeitungsfunktion oder des erstellten Steuerungsprogramms übermittelt werden.

19. Programmiersystem nach Anspruch 2, dadurch gekennzeichnet, daß die Daten-Vorwärts-Rückwärts-Zugriffs-Einheit (DVRZE) Eingaben bei der Programmerstellung in Dialogsteuerdaten und Maschinensteuerdaten auftrennt und eindeutige Verknüpfungsschlüssel zwischen Dialogsteuerdaten und Maschinensteuerdaten setzt.

20. Programmiersystem nach Anspruch 19, dadurch gekennzeichnet, daß die Daten-Vorwärts-Rückwärts-Zugriffs-Einheit (DVRZE) die Verknüpfungsschlüssel zwischen Dialogdatenteil und Maschinensteuerdatenteil auftrennt und den Maschinensteuerdatenteil in den Programmspeicher der Maschinensteuerung überträgt, wobei keine Übersetzung des Programms stattfindet, bevor das erstellte Programm in der Steuerung der CNC-Werkzeugmaschinen abläuft.

21. Programmiersystem nach Anspruch 20, dadurch gekennzeichnet, daß durch die Daten-Vorwärts-Rückwärts-Zugriffs-Einheit (DVRZE) gesetzte Verknüpfungsschlüssel auch nach der Auftrennung zwischen Dialogdatenteil und Maschinensteuerdatenteil eindeutig erhalten bleiben und damit ein im Maschinenprogrammspeicher geänderter Maschinensteuerdatenteil von der Daten-Vorwärts-Rückwärts-Zugriffs-Einheit (DVRZE) zurückgeholt und eindeutig dem Dialogsteuerdatenteil durch Herstellung der Verbindungen über die Verknüpfungsschlüssel zugeordnet werden können.

22. Programmiersystem nach Anspruch 1 bis 21, dadurch gekennzeichnet, daß manuell im Maschinensteuerdatenteil in einem Maschinencode (G-Code) eingegebene Programmabschnitte von einer Applikationseinheit (GEO) gelesen, graphisch dargestellt und graphisch interaktiv weiterverarbeitet werden können und ein Zugriff für die Applikationseinheit (GEO) dabei von der Daten-Vorwärts-Rückwärts-Zugriffs-Einheit (DVRZE) über den Zugangsschlüssel hergestellt wird, welche vom Anwender für Start und Ende des Programmabschnitts im Maschinensteuerdatenteil eingegeben wurden.

23. Verfahren zur Erstellung eines NC-Programmes (Bearbeitungsprogramms) für CNC-Werkzeugmaschinen mit Hilfe eines dialogorientierten Programmiersystems, welches die Merkmale eines der Ansprüche 1 bis 22 aufweist, wobei
- die Programmerstellung für den gewünschten Bearbeitungsprozeß der Maschine, durch die Verwendung von zu einem früheren Zeitpunkt vom Anwender beschriebener Bearbeitungsfunktionen erfolgt;
- der gewünschte Bearbeitungsablauf durch Festlegung der Reihenfolge dieser Bearbeitungsfunktionen programmiert wird; und
- die den Bearbeitungsprozeß der CNC-Werkzeugmaschine für das entsprechende NC-Programm spezifizierenden Parameter über den vom Anwender bei der Erstellung der Bearbeitungsfunktionen zu einem früheren Zeitpunkt in einer Funktionsbeschreibungseinheit festgelegten Dialog eingegeben werden;
gekennzeichnet durch den Schritt, daß
- ein im Programmiersystem erstelltes Programm sofort nach der Eingabe einer jeden Bearbeitungsfunktion in die Teildaten Maschinensteuerdaten und Dialogsteuerdaten aufgetrennt wird und Verknüpfungsschlüssel an den relevanten Stellen des Maschinensteuerdatenteils und des Dialogdatenteils eingesetzt werden, so daß eine eindeutige Verbindung des Maschinensteuerdatenteils mit dem Dialogdatenteil hergestellt wird.

## Claims

1. A dialog-oriented programming system for the generation of control programs for a CNC machine tool, comprising
- a data input and visualization means (1, 2) for the input and/or modification of data which determine the desired function and control sequence of the CNC machine tool;
- a central storage and processing unit (3) in which the input data are processed to control data for a machine controller of the CNC machine tool and output via an input/output unit as a control program for the CNC machine tool to its machine controller; where
- a function description unit (FB) for the description of the machining and dialog sequence is provided in the central storage and processing unit (3), where a function control matrix together with a sequence description are input in the function description unit (FB) and the function control matrix contains information with respect to the assignment and association of program parameters to the desired functions of the CNC machine tool;
- the central storage and processing unit (3) includes a function control unit (FS) which links the edited data with current data and/or further application units (APPL, WTM, RTM, TTM, GEO) and processes them; and
- a dialog-oriented control program for the CNC machine tool is generated in the central storage and processing unit (3) from the current data and/or the edited data which are linked with the further application units (APPL, WTM, RTM, TTM, GEO, NNN),
characterized in that
- a data forward/backward access unit (DVRZE) is provided which is adapted to split a program which has been generated in the programming system immediately after the input of each machining function into the partial data machine control data and dialog control data and to insert interconnection codes at the relevant locations of the machine control data portion and the dialog data portion, by means of which a unique connection between the machine control data portion and the dialog data portion can be made.

2. A dialog-oriented programming system for a CNC machine tool according to Claim 1, characterized in that access operations on data and/or program (portions) in the central storage and processing unit (3), in a non-volatile backup memory (6), or in another memory of the programming system are controlled by the data forward/backward access unit (DVRZE), with access paths to the data and/or the program(s) (portion) (s) being determined and established depending on the access codes which have been generated by the function control unit.

3. A dialog-oriented programming system for a CNC machine tool according to Claim 1 or 2, characterized in that the central storage and processing unit comprises a system program memory, a main memory and a parameter memory, with
- a motion and sequence program with all additional information as well as a source program being stored in the systm program memory;
- currently required system and application programs as well as the data processed by same and the results being stored in the main memory; and
- the addresses of variable input and control data being stored in the parameter memory.

4. A dialog-oriented programming system for a CNC machine tool according to Claims 1 through 3, characterized in that
- an activation unit is provided by means of which desired function attributes of the function unit can be activated for individual parameters in conjunction with the application units.

5. A dialog-oriented programming system for a CNC machine tool according to Claims 1 through 3, characterized in that
- the data of the function description unit (FB) are supplied to a control list generation unit (5).

6. A dialog-oriented programming system for a CNC machine tool according to Claims 1 through 5, characterized in that
- input function attributes are used as (access) codes which result in the initiation of a function sequence in the function control unit in conjunction with the application units.

7. A dialog-oriented programming system for a CNC machine tool according to one or several of Claims 1 through 6, characterized in that
- a data base is provided where the input data are commonly stored, with the data base being divided into a section for machine control data and a section for dialog control data of the programming system;
- a function control unit is provided for generating a control program for the CNC machine tool on the basis of the input data, with the function control unit comprising a data control module which performs the access to the machine control data and the dialog control data of the programming system in the data base as well as their management; and
- the control program for the CNC machine tool comprises a first part which includes only the sequence data which are required for the execution of the program in the CNC machine tool, and a second part which includes all system-related supplementary information.

8. A dialog-oriented programming system for a CNC machine tool according to Claim 7, characterized in that the data control module carries out access and management operations both on a dialog source level of the program as well as in the control program for the CNC machine tool.

9. A dialog-oriented programming system for a CNC machine tool according to Claim 7 or 8, characterized in that the data control module combines the sequence data and the system-related supplementary parameters for a representation for the user and for modifications and separates them from each other for controlling the CNC machine tool.

10. A dialog-oriented programming system for a CNC machine tool according to one of Claims 7 to 9, characterized in that the function sequence of the CNC machine tool is specified as a parametric control program in which parameters are assigned to individual functions of the CNC machine tool.

11. A dialog-oriented programming system for a CNC machine tool according to one of Claims 7 to 10, characterized in that the parameters are stored in the form of a matrix, with said matrix including a multitude of activatable function attributes.

12. A dialog-oriented programming system for a CNC machine tool according to Claim 11, characterized in that each funtion attribute serves to initiate a certain function sequence in the function control unit in conjunction with the application units.

13. A dialog-oriented programming system for a CNC machine tool according to one of Claims 7 to 12, characterized in that modifications in the control program for the CNC machine tool are carried out by the data control module in the dialog source level of the program.

14. A dialog-oriented programming system for a CNC machine tool according to one of Claims 7 to 13, characterized in that the data control module selects program sentences of the control program for the CNC machine tool partial datasets and identifies them in the first portion of the control program, which includes only the sequence data.

15. A dialog-oriented programming system for a CNC machine tool according to one of Claims 7 to 14, characterized in that machining functions are available in the central storage and processing unit (3), which were generated by means of the function description unit and which represent the scope of functions which is available in the programming system for the programming operation via the programming device so that the scope of functions of the programming system can be modified and expanded by the user.

16. A programming device according to Claim 15, characterized in that the function description unit includes an activation unit which generates a function control matrix from the information as input for the machining functions.

17. A programming system according to Claims 14 and 15, characterized in that data input into the function description unit during the description of machining functions via an input unit (2) are selected and supplied to a function control unit and that the input dialogues associated with a machining function are generated by the function control unit and displayed on the display unit (1).

18. A programming system according to Claim 2, characterized in that the data forward/backward access unit (DVRZE) generates the access codes independently so that no information concerning the structure of a machining function or the generated control program is supplied to the individual function units of the programming system.

19. A programming system according to Claim 2, characterized in that the data forward/backward access unit (DVRZE) splits the inputs during the program generation into dialog control data and machine control data and sets unique interconnection codes bewtween dialog control data and machine control data.

20. A programming system according to Claim 19, characterized in that the data forward/backward access unit (DVRZE) splits the interconnection codes between the dialog data portion and the machine control data portion and transmits the machine control data portion into the program memory of the machine controller, without a program compilation being carried out prior to the execution of the generated program in the controller of the CNC machine tool.

21. A programming system according to Claim 20, characterized in that interconnection codes set by the data forward/ backward access unit (DVRZE) are maintained unique even after splitting the dialog data portion and the machine control data portion so that a machine control data portion which has been modified in the machine program memory can be retrieved by the data forward/backward access unit (DVRZE) and assigned uniquely to the dialog control data portion by making the connections via the interconnection codes.

22. A programming system according to Claims 1 through 21, characterized in that program sections manually input into the machine control data portion in a machine code (G code) can be read, graphically displayed and further processed graphically in an interactive manner and that an access for the application unit (GEO) is made by the data forward/ backward access unit (DVRZE) via the access code, which were input by the user for start and end of the program section in the machine control data portion.

23. A method for generating an NC program (machining program) for CNC machine tools by means of a dialog-oriented programming system with the characteristics of one of Claims 1 through 22, wherein
- the program generation for the desired machine process of the machine is effected by use of machining functions which have been previously described by the user;
- the desired machining sequence is programmed by establishing the order of these machining functions; and
- the parameters which specify the machining process of the CNC machine tool for the respective NC program are input via a dialog which was established by the user at an earlier time in a function descritpion unit during the generation of the machining functions;
characterized by the step that
- a program generated in the programming system is split immediately after the input of each machining function into the partial data machine control data and dialog control data and interconnection codes at the relevant locations of the machine control data portion and the dialog data portion are employed, so that a unique connection of the machine control data portion and the dialog data portion can be made.

## Revendications

1. Système de programmation orienté dialogues, pour la génération de programmes de commande pour une machine-outil CNC, comprenant:
- un dispositif (1, 2) de saisie et de visualisation des données, permettant d'entrer et/ou de modifier des données déterminant le déroulement souhaité des fonctions et de la commande de la machine-outil CNC;
- une unité centrale (3) de stockage et de traitement, dans laquelle les données entrées sont traitées pour produire des données de commande machine d'une machine-outil CNC, et sont émises sous forme d'un programme de commande pour la machine-outil CNC au système de commande de cette machine, par l'intermédiaire d'une unité entrée/sortie; où
- une unité de description des fonctions (FB) permettant de décrire le déroulement des opérations d'usinage et des dialogues existe dans l'unité centrale (3) de stockage et de traitement, une matrice de commande des fonctions, associée à une description du déroulement des opérations, est entrée au niveau de l'unité de description des fonctions (FB), et la matrice de commande des fonctions contient des informations relatives à la distribution et l'association des paramètres du programme aux fonctions souhaitées de la machine-outil CNC;
- une unité de commande des fonctions (FS) est contenue dans l'unité centrale (3) de stockage et de traitement, qui établit des liens entre les données préparées dans l'unité de description des fonctions (FB) et les données actuelles et/ou d'autres unités d'application (APPL, WTM, RTM, TTM, GEO), et les traite; et où
- un programme de commande pour la machine-outil CNC, orienté dialogues, est créé dans l'unité centrale (3) de stockage et de traitement, à partir des données ainsi préparées et reliées aux données actuelles et/ou aux autres unités d'application (APPL, WTM, RTM, TTM, GEO, NNN), caractérisé en ce que
- une unité d'accès aux données en va-et-vient (DVRZE) est prévue, qui est conçue pour découper un programme créé dans le système de programmation, immédiatement après l'entrée de chaque fonction d'usinage, dans ses parties de données de commande machine et de données de commande des dialogues, et pour appliquer des clés de chaînage aux points appropriés des parties de données de commande machine et des parties de données de dialogue, clés grâce auxquelles une relation univoque peut être établie entre la partie de données de commande machine et la partie de données de dialogue.

2. Système de programmation orienté dialogues pour une machine-outil CNC selon la revendication 1, caractérisé en ce que les accès aux (parties de) données et/ou programmes à l'intérieur de l'unité centrale (3) de stockage et de traitement sont gérés, dans une mémoire permanente de fond (6) ou dans une autre mémoire du système de programmation, par l'unité d'accès aux données en va-et-vient (DVRZE), les chemins d'accès aux données et/ou programmes ou parties de programmes étant définis et établis en fonction des clés d'accès appliquées par l'unité de commande des fonctions.

3. Système de programmation orienté dialogues pour une machine-outil CNC selon la revendication 1 ou la revendication 2, caractérisé en ce que l'unité centrale de stockage et de traitement comporte une mémoire de programmes système, une mémoire de travail, et une mémoire de paramètres,
- un programme de mouvement et de déroulement contenant toutes les informations complémentaires, ainsi qu'un programme source, étant enregistrés dans la mémoire de programmes système;
- des programmes système et utilisateur momentanément requis, ainsi que les données à traiter par ces programmes et leurs résultats, étant enregistrés dans la mémoire de travail; et
- les adresses des données variables d'entrée et de commande étant enregistrées dans la mémoire de paramètres.

4. Système de programmation orienté dialogues pour une machine-outil CNC selon les revendications 1 à 3, caractérisé en ce que
- une unité d'activation existe, qui permet d'activer des attributs de fonction souhaités de l'unité de fonction en association avec les unités d'application pour différents paramètres.

5. Système de programmation orienté dialogues pour une machine-outil CNC selon les revendications 1 à 3, caractérisé en ce que
- les données de l'unité de description des fonctions (FB) sont acheminées à une unité (5) de création de listes de commandes.

6. Système de programmation orienté dialogues pour une machine-outil CNC selon les revendications 1 à 5, caractérisé en ce que
- des attributs de fonction entrés sont employés en tant que clés (d'accès), qui conduisent au déclenchement d'une séquence de fonctions dans l'unité de commande des fonctions en association avec les unités d'application.

7. Système de programmation orienté dialogues pour une machine-outil CNC selon l'une ou plusieurs des revendications 1 à 6, caractérisé en ce que
- une base de données existe, qui stocke l'ensemble des données entrées, la base de données étant divisée en une zone pour les données de commande machine et une zone pour les données de commande des dialogues du système de programmation;
- une unité de commande des fonctions est prévue, permettant de créer un programme de commande de la machine-outil CNC à partir des données entrées, l'unité de commande des fonctions comportant un module de gestion des données qui exécute l'accès aux données de commande machine et aux données de commande des dialogues du système de programmation, contenues dans la base de données, et en assure la gestion; et en ce que
- le programme de commande de la machine-outil CNC comprend une première partie qui ne contient que les données de déroulement des opérations, nécessaires pour le déroulement du programme sur la machine-outil CNC, et une seconde partie qui contient toutes les informations complémentaires liées au système.

8. Système de programmation orienté dialogues pour une machine-outil CNC selon la revendication 7, caractérisé en ce que le module d'accès aux données pilote l'accès et effectue la gestion à la fois au niveau des dialogues sources du programme, et au niveau du programme de commande de la machine-outil CNC.

9. Système de programmation orienté dialogues pour une machine-outil CNC selon la revendication 7 ou 8, caractérisé en ce que le module de commande des données rattache les données de déroulement aux paramètres complémentaires liés au système en vue de leur affichage pour l'utilisateur et leur modification , et les sépare les unes des autres en vue de la commande de la machine-outil CNC.

10. Système de programmation orienté dialogues pour une machine-outil CNC selon l'une des revendications 7 à 9, caractérisé en ce que le déroulement des fonctions de la machine-outil CNC est défini sous forme d'un programme de commande paramétré, où des paramètres sont définis pour différentes fonctions de la machine-outil CNC.

11. Système de programmation orienté dialogues pour une machine-outil CNC selon l'une des revendications 7 à 10, caractérisé en ce que les paramètres sont enregistrés sous forme d'une matrice, la matrice contenant une multitude d'attributs de fonction pouvant être activée.

12. Système de programmation orienté dialogues pour une machine-outil CNC selon la revendication 11, caractérisé en ce que chaque attribut de fonction sert à déclencher une séquence de fonctions particulière dans l'unité de commande des fonctions, en association avec les unités d'application.

13. Système de programmation orienté dialogues pour une machine-outil CNC selon l'une des revendications 7 à 12, caractérisé en ce que les modifications apportées au programme de commande de la machine-outil CNC sont effectuées par le module de commande des dialogues au niveau des dialogues sources du programme.

14. Système de programmation orienté dialogues pour une machine-outil CNC selon l'une des revendications 7 à 13, caractérisé en ce que le module de commande des données sélectionne des sous-ensembles de données dans le programme de commande de la machine-outil CNC, et les marque dans la première partie du programme de commande, qui contient les données de déroulement des opérations.

15. Système de programmation orienté dialogues pour une machine-outil CNC selon l'une des revendications 7 à 14, caractérisé en ce que les fonctions d'usinage sont disponibles dans l'unité centrale (3) de stockage et de traitement, ces fonctions ayant été créées à l'aide de l'unité de description des fonctions et représentant la gamme de fonctions disponibles pour le processus de programmation à l'aide de l'appareil de programmation, dans le système de programmation, de manière que la gamme de fonctions du système de programmation puisse être modifiée et complétée par l'utilisateur.

16. Appareil de programmation selon la revendication 15, caractérisé en ce qu'une unité d'activation existe dans l'unité de description des fonctions, qui construit une matrice de commande des fonctions à partir des informations entrées pour les fonctions d'usinage.

17. Système de programmation selon les revendications 14 et 15, caractérisé en ce que dans l'unité de description des fonctions, des données entrées dans le cadre de l'écriture de fonctions d'usinage sont sélectionnées, lors de l'opération de programmation, par l'intermédiaire d'une unité de saisie (2), et sont acheminées à une unité de commande des fonctions, et en ce que l'unité de commande des fonctions génère les dialogues de saisie associés à une fonction d'usinage et les affiche à l'unité d'affichage (1).

18. Système de programmation selon la revendication 2, caractérisé en ce que l'unité d'accès aux données en va-et-vient (DVRZE) établit de façon autonome les clés d'accès, de façon qu'aucune information sur la structure d'une fonction d'usinage ou du programme de commande créé ne soit communiquée aux différentes unités de fonction du système de programmation .

19. Système de programmation selon la revendication 2, caractérisé en ce que l'unité d'accès aux données en va-et-vient (DVRZE) découpe les entrées, lors de la création du programme, en données de commande des dialogues et en données de commande machine, et pose des clés de chaînage univoques entre les données de commande des dialogues et les données de commande machine.

20. Système de programmation selon la revendication 19, caractérisé en ce que l'unité d'accès aux données en va-et-vient (DVRZE) découpe les clés de chaînage entre la composante de données dialogue et la composante de données de commande machine, et transfère la composante de données de commande machine dans la mémoire programme de la commande machine, sans intervention d'une traduction du programme, avant que le nouveau programme ainsi créé ne soit exécuté dans le système de commande de la machine-outil CNC.

21. Système de programmation selon la revendication 20, caractérisé en ce que les clés de chaînage posées par l'unité d'accès aux données en va-et-vient (DVRZE) sont conservées de façon univoque même après le découpage en parties de données dialogue et de données de commande machine, et que, de cette manière, une partie données de commande machine modifiée dans la mémoire programme machine peut être récupérée par l'unité d'accès aux données en va-et-vient (DVRZE) et peut être associée de façon univoque à la partie données de commande des dialogues, grâce à l'établissement des liens via les clés de chaînage.

22. Système de programmation selon les revendications 1 à 21, caractérisé en ce que des sections de programme entrées manuellement en code machine (code G) dans la partie données de commande machine peuvent être lues, représentées sous forme graphique, et traitées de façon graphique interactive par une unité d'application (GEO), un accès pour l'unité d'application (GEO) étant alors établi par l'unité d'accès aux données en va-et-vient (DVRZE) par l'intermédiaire de la clé d'accès qui a été définie par l'utilisateur pour le début et la fin de la section de programme dans la partie des données de commande machine.

23. Procédé de création d'un programme CN (programme d'usinage) pour des machines-outils CNC à l'aide d'un système de programmation orienté dialogues présentant les caractéristiques selon l'une des revendications 1 à 22, où
- la création d'un programme correspondant au processus d'usinage souhaité de la machine est effectuée en utilisant des fonctions d'usinage préalablement définies par l'utilisateur;
- la séquence souhaitée d'usinage est programmée par définition de l'ordre de ces fonctions d'usinage; et où
- les paramètres spécifiant le processus d'usinage sur la machine-outil CNC sont entrés à travers le dialogue défini par l'utilisateur lors de la création préalable des fonctions d'usinage dans le cadre d'une unité de description des fonctions;
caractérisé par l'étape qui consiste en ce qu'
- un programme créé dans le système de programmation est découpé immédiatement après l'entrée de chaque fonction d'usinage en ses composantes de données "données de commande machine" et "données de commande des dialogues", et en ce que des clés de chaînage sont placées aux points appropriés de la partie données de commande machine et de la partie données de commande des dialogues, de manière à produire une liaison univoque entre la partie données de commande machine et la partie données dialogue.
